# EUROPEAN PATENT APPLICATION

(11) **EP 4 607 428 A1**
(43) Date of publication of application: **27.08.2025**
(21) Application number: 25159063.4
(22) Date of filing: 20.02.2025
(51) Int. Cl.: G06Q 10/20, G05B 19/418

(54) **AUTONOMOUS TECHNICIAN SYSTEM FOR COMPONENT HANDLING AND INSTALLATION**

(30) Priority: 21.02.2024 US 202418583351
(71) Applicant: eBay Inc., San Jose, CA 95125 (US)
(72) Inventor: CHALKLEY, Andrew, SAN JOSE, 95125 (US)
(74) Representative: Müller-Boré & Partner Patentanwälte PartG mbB

(57) **Abstract**

An autonomous technician system for component handling and installation is described. In one or more implementations, an autonomous technician comprises one or more robots to perform operations including component condition verification, component transport, and component installation. The one or more robots verify compatibility of the component with a different apparatus, where the component is listed by a seller in an item listing and is purchased by a buyer of the apparatus to which the component is installed by the one or more robots. In variations, the one or more robots transport the component from the seller to a location of the apparatus of the buyer. The one or more robots further utilize various installation protocols based on the condition of the component and a condition of the apparatus.

## Description

### BACKGROUND

Electronic commerce platforms, also known as e-commerce platforms, support transactions between buyers and sellers of goods and services via item listings. Goods offered by sellers sometimes include components for vehicles, appliances, and other devices. Such platforms support searches by buyers for specific device components, such as those used for repair, augmentation, or replacement of other devices.

It is often the responsibility of a buyer to ensure that a component purchased via an item listing is suitable for the buyer's intended use of the component. As component compatibility knowledge can vary widely from buyer to buyer, and some buyers prefer to complete transactions with little to no knowledge of whether a component is compatible with their device, situations can occur in which the purchased component is incompatible with the device. Such situations result in buyer and seller frustration. Further, such situations can increase a return rate of purchased items across the platform, which increases a load on the platform to facilitate the item returns, re-list the returned items, and so forth.

### SUMMARY

Techniques for controlling at least one autonomous technician for component handling and installation are described. In one or more implementations, a system for an autonomous technician comprises at least one robot configured to verify a component at a first location, e.g., a location associated with a seller of the component or associated with an e-commerce platform. In particular, the component is verified for an apparatus that is located at a second location, e.g., a location associated with a buyer of the component. The at least one robot verifies compatibility of the component with the apparatus. In one or more implementations, the at least one robot further transports the component to the second location and installs the component in the apparatus.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of an environment in an example implementation that is operable to employ at least one autonomous technician deployable by a service provider system as described herein.
FIG. 2 depicts an example implementation showing generation of a listing for a component via a service provider system.
FIG. 3 depicts an example implementation showing a transaction involving a listing for a component from a service provider system and an associated request for assistance from an autonomous technician.
FIG. 4 depicts a robot implementing an autonomous technician, showing sensors, I/O devices, locomotion framework, and other features of the robot.
FIG. 5 depicts an example implementation showing component verification performed by an autonomous technician.
FIG. 6 depicts an example implementation showing route generation performed by an autonomous technician.
FIG. 7 depicts an example route generated by an autonomous technician, with the autonomous technician indicated at a first stage of the route.
FIG. 8 depicts the example route with the autonomous technician indicated at a second stage of the route.
FIG. 9 depicts the example route of with the autonomous technician indicated at a third stage of the route.
FIG. 10 depicts a robot implementing an autonomous technician, showing an installation tool framework and component support framework of the robot.
FIG. 11 depicts a perspective view of an example dynamic toolhead included by an autonomous technician, with the dynamic toolhead in a retracted condition.
FIG. 12 depicts another perspective view of the dynamic toolhead with a first portion of the dynamic toolhead extended.
FIG. 13 depicts another perspective view of the dynamic toolhead with a second portion of the dynamic toolhead extended.
FIG. 14 depicts another perspective view of the dynamic toolhead with a third portion of the dynamic toolhead extended.
FIG. 15 depicts an example implementation showing apparatus verification performed by an autonomous technician.
FIG. 16 depicts an example implementation showing input to an installation control module of an autonomous technician.
FIG. 17 shows a flow diagram depicting a procedure in an example implementation which includes verifying a component for an apparatus.
FIG. 18 shows a flow diagram depicting a procedure in an example implementation which includes transporting a component for an apparatus from a seller location to a buyer location.
FIG. 19 shows a flow diagram depicting a procedure in an example implementation which includes installing a component for an apparatus.
FIG. 20 depicts a procedure in an example implementation of an autonomous technician system for component handling and installation.
FIG. 21 illustrates an example system that includes an example computing device that is representative of one or more computing systems and/or devices for implementing the various techniques described herein.

### DETAILED DESCRIPTION

### Overview

Service provider systems support e-commerce platforms and provide access to item listings. Buyers navigate the item listings via an application such as a web browser or web-based application (e.g., a "mobile app") to locate items for purchase. Item listings managed by a service provider system and made available for browsing via the e-commerce platform are often directed toward different types of items or categories of items. For example, some item listings are directed toward consumer electronics, while other item listings are directed toward automotive accessories.

Such platforms support item listings for components that are configured to be installed to other devices, such as memory and storage components for computing devices, and/or filters, radios, cameras, and engine parts for vehicles. Indeed, e-commerce platforms may publish item listings for any of a variety of items that are "components" intended to be installed in relation to or otherwise combined with another device, system, or apparatus. Buyers navigate the item listings and complete transactions via the item listings to order such components. In one example scenario, for instance, a buyer possesses a vehicle of a particular make and model, and the buyer desires to order a replacement side mirror for the vehicle. The buyer navigates through item listings for various vehicle side mirrors and identifies an item listing describing a side mirror that the buyer believes will be compatible with the make and model of their vehicle. The buyer then completes a transaction via the item listing to purchase the side mirror and receives the side mirror via a delivery service or local pick-up.

Often, buyers are expected to determine via their own knowledge or expertise whether a given component described by an item listing is compatible with a device or apparatus owned by the buyer, such as a vehicle. However, sometimes buyers do not possess sufficient knowledge to accurately assess whether a listed component is compatible. Buyers that purchase components with an expectation that the components are compatible with their devices can become frustrated once the components are delivered, and the buyers discover that the components cannot be installed due to unexpected compatibility issues.

Some conventional approaches toward reducing occurrences of unexpected compatibility issues include implementation of search filters that utilize device information input by buyers. For example, a buyer searching for a component for a particular device inputs information describing the device via an interface. The platform searches a catalog of different devices based on the information provided by the buyer. The platform identifies which device entry within the catalog has attributes that match the description of the device input by the buyer. The identified device entry is associated with a particular group of compatible components, and listings for the components identified as compatible with the device are provided to the buyer by the platform as search results. In one example scenario, a buyer inputs information describing the make and model of their vehicle, and the platform returns item listings for components compatible with the particular vehicle.

However, such approaches can be subject to error. As one example, such approaches do not consider oversights or misrepresentations in the descriptions of the components in the item listings. In conditions in which the description of a component in an item listing is not accurate in view of the actual component delivered to the buyer, unexpected compatibility issues can occur. Further, such approaches rely on information provided by the buyer to accurately identify the apparatus (e.g., the device) of the buyer. In some situations, the buyer does not possess such information or provides inaccurate information.

Further, even if a buyer completes a transaction for a component that is compatible with their apparatus, the buyer may not have sufficient knowledge to perform installation of the component. Buyers may become frustrated if installation is more complex than anticipated and/or sufficient instructions are not provided. Thus, it is desirable to reduce occurrences of component incompatibility and increase a success of component installation.

Accordingly, techniques for component condition verification and component installation are described herein that address these technical challenges. In one or more implementations, a robot or plurality of robots forms an autonomous technician configured to perform operations including verifying whether a component purchased via an item listing matches a description of the component within the item listing. The autonomous technician detects the condition of the component via one or more sensors and determines an identifier of the component. The autonomous technician compares the identifier to known identifiers to determine whether the component is compatible with an apparatus of the buyer. In one or more implementations, after compatibility is determined, the autonomous technician is further configured to transport the purchased component to a location of the buyer and/or perform installation of the component to the apparatus of the buyer. To do so, the autonomous technician employs a locomotion framework to transport the purchased component to the location of the buyer, and an installation tool framework to install the component to the apparatus of the buyer.

In one or more implementations, the autonomous technician is further configured to communicate electronically with the service provider system supporting the e-commerce platform. For example, the autonomous technician communicates with the service provider system via a wired or wireless connection to receive instructions for deployment, to receive data from databases of the service provider system, to receive component transaction information, and so forth.

In accordance with the described techniques, for instance, following completion of a transaction using an item listing involving a seller of a component and a buyer of the component, the autonomous technician receives a communication from the service provider system. Examples of the communication include, but are not limited to, communications to deploy the autonomous technician to perform operations including component verification, component transport, and component installation, to name just a few. The autonomous technician receives the component from the seller, e.g., by picking up the component at the location of the seller. In one or more implementations, the autonomous technician further transports the component to the location of the buyer and/or installs the component to an apparatus at the location of the buyer.

In some implementations, the autonomous technician includes a single robot configured to perform all the operations including the verification of the condition of the component, the transport of the component to location of the buyer, and the installation of the component to the apparatus of the buyer. In other implementations, the autonomous technician includes multiple robots, such that each robot is configured to perform different operations. In one example, a first robot performs operations associated with verification of the condition of the component. A second robot receives the component from the first robot and transports the component to the location of buyer. A third robot receives the component delivered to the location of the buyer by the second robot and installs the component to the apparatus of the buyer. In another example, the autonomous technician includes two robots, with the first robot configured to perform the verification of the condition of the component and with the second robot configured to install the component to the apparatus of the buyer. In this example, the first robot and/or the second robot transports the component to the location of the buyer following the verification of the condition of the component. It is to be appreciated that the autonomous technician may include any number of robots at each stage of the process, e.g., one or more robots to perform verification, one or more robots to transport the item, and/or one or more robots to install the item. Additionally, a given robot may be configured to perform one or more of the steps, e.g., verification, transportation, and installation, without departing from the spirit of the described techniques.

In one or more implementations, a robot of the autonomous technician that performs installation of the component to the apparatus includes a dynamic toolhead that is adjustable based on installation operations to be performed by the robot. The dynamic toolhead includes various tools that are stowed or extended based on the installation operations to be performed. For example, during installation of a first fastener of the component to the apparatus, the dynamic toolhead extends a first tool to rotate the first fastener and stows other tools not used to rotate the first fastener. During installation of a different, second fastener, the dynamic toolhead extends a second tool to engage with the second fastener and optionally stows the first tool. Operation of the dynamic toolhead is controlled via one or more machine learning models in some implementations, resulting in increased adaptability of the robot for a variety of different component installation operations. By configuring the autonomous technician in this way, the autonomous technician performs operations such as verification of component condition and installation of the component to the apparatus, thereby supplementing services provided by the e-commerce platform to increase buyer confidence and reduce item return rates.

In some aspects, the techniques described herein relate to a system of one or more robots that implement an autonomous technician, the system including: the autonomous technician configured to perform operations including: verifying a component at a first location for an apparatus that is located at a second location, including verifying compatibility of the component with the apparatus; transporting the component to the second location; and installing the component in the apparatus.

In some aspects, the techniques described herein relate to a system, wherein the autonomous technician includes one or more sensors, and verifying compatibility of the component with the apparatus includes: assessing the component at the first location using the one or more sensors; determining an identifier of the component based on an output of the one or more sensors during the assessing; and matching the identifier to the apparatus.

In some aspects, the techniques described herein relate to a system, wherein the autonomous technician includes a dynamic toolhead, and installing the component in the apparatus with the autonomous technician includes: detecting a shape of a fastener to be rotated during the installing; and adjusting the dynamic toolhead based on the detected shape of the fastener.

In some aspects, the techniques described herein relate to a system, wherein the autonomous technician includes: one or more sensors; a locomotion framework; and a reasoning module configured to receive feedback from the one or more sensors and issue commands to the locomotion framework based on the received feedback.

In some aspects, the techniques described herein relate to a system, wherein the autonomous technician includes a component recognition machine learning model stored in memory, the component recognition machine learning model trained on data including a plurality of component identifiers, and the determining of the identifier of the component is performed using the component recognition machine learning model.

In some aspects, the techniques described herein relate to a system, wherein the autonomous technician includes an installation procedure machine learning model stored in memory, the installation procedure machine learning model trained on data including a plurality of installation instructions, and installing the component in the apparatus is performed using the installation procedure machine learning model.

In some aspects, the techniques described herein relate to a system, wherein the autonomous technician includes a component recognition machine learning model and an installation procedure machine learning model, the component recognition machine learning model trained on data including a plurality of component identifiers and the installation procedure machine learning model trained on data including a plurality of installation instructions, and an output of the component recognition machine learning model is an input of the installation procedure machine learning model.

In some aspects, the techniques described herein relate to a system, wherein the autonomous technician includes a location and routing module, and transporting the component to the second location includes: receiving transaction data associated with the component, the transaction data including location data describing the second location; generating a route to the second location via the location and routing module based on the location data; and transporting the component along the route to the second location.

In some aspects, the techniques described herein relate to a system, wherein the autonomous technician includes a first robot configured to perform the verifying of the component at the first location for the apparatus that is located at the second location, and a second robot configured to perform the installing of the component in the apparatus.

In some aspects, the techniques described herein relate to a system, wherein the autonomous technician includes a network communication module configured to retrieve component installation data via wired or wireless communications responsive to determining an identifier of the component using one or more sensors.

In some aspects, the techniques described herein relate to a system, wherein the network communication module retrieves the component installation data from a service provider system including a listing of the component.

In some aspects, the techniques described herein relate to a system, wherein the first location is associated with a seller of the component and the second location is associated with a buyer of the component.

In some aspects, the techniques described herein relate to a method implemented by one or more robots of an autonomous technician, the method including: verifying, by the autonomous technician, a component at a first location for an apparatus that is located at a second location; transporting, by the autonomous technician, the component to the second location; and installing, by the autonomous technician, the component in the apparatus.

In some aspects, the techniques described herein relate to a method, wherein verifying the component at the first location for the apparatus that is located at the second location includes: assessing the component, by the autonomous technician, using one or more sensors of the autonomous technician; determining, by the autonomous technician, an identifier of the component based on an output of the one or more sensors during the assessing; and matching, by the autonomous technician, the identifier to the apparatus.

In some aspects, the techniques described herein relate to a method, wherein transporting the component to the second location includes: receiving, by the autonomous technician, location data describing the second location; generating, by the autonomous technician, a route to the second location based on the location data; and transporting, by the autonomous technician, the component along the route to the second location.

In some aspects, the techniques described herein relate to a method, wherein verifying the component at the first location for the apparatus that is located at the second location is performed by the autonomous technician using a first machine learning model of the autonomous technician, and installing the component in the apparatus is performed by the autonomous technician using a second machine learning model of the autonomous technician.

In some aspects, the techniques described herein relate to a method, wherein the first machine learning model is trained on data describing a plurality of known component identifiers, and the second machine learning model is trained on data describing a plurality of installation protocols.

In some aspects, the techniques described herein relate to a method, further including: verifying, by the autonomous technician, a condition of the apparatus that is located at the second location by: acquiring, by the autonomous technician, image data describing the apparatus using one or more sensors of the autonomous technician; detecting, by the autonomous technician, a condition of the apparatus based on the image data; and determining, by the autonomous technician, whether the detected condition of the apparatus matches a described condition of the apparatus using a machine learning model.

In some aspects, the techniques described herein relate to one or more computer-readable storage media storing executable instructions which, responsive to execution by an autonomous technician implemented by one or more robots, cause the autonomous technician to perform operations including: verifying a component at a first location for an apparatus that is located at a second location, including verifying compatibility of the component with the apparatus; transporting the component to the second location; and installing the component in the apparatus.

In some aspects, the techniques described herein relate to one or more computer-readable storage media, the operations further including: inputting data describing the component to a first machine learning model for the verifying of the component; generating a route from the first location to the second location to be travelled by the autonomous technician for the transporting of the component to the second location; inputting data describing one or more installation protocols to a second machine learning model for the installing of the component in the apparatus; and verifying a condition of the apparatus that is located at the second location by inputting data describing the apparatus to a third machine learning model.

In the following discussion, an exemplary environment is first described that may employ the techniques described herein. Examples of implementation details and procedures are then described which may be performed in the exemplary environment as well as other environments. Performance of the exemplary procedures is not limited to the exemplary environment and the exemplary environment is not limited to performance of the exemplary procedures.

### Example of an Environment

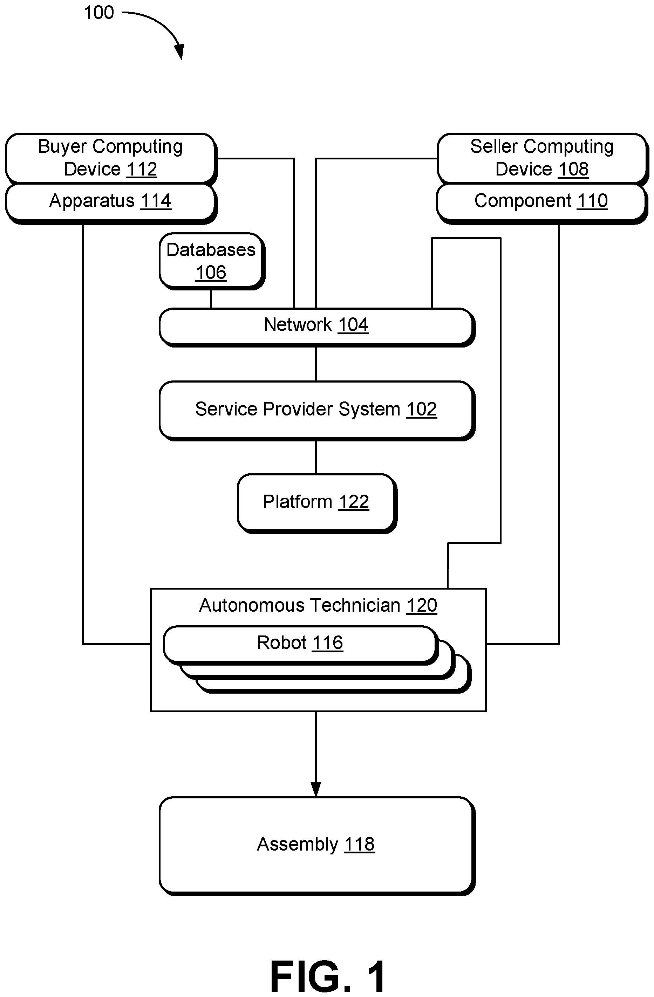

FIG. 1 is an illustration of an environment 100 in an example implementation that is operable to employ techniques for an autonomous technician as described herein. The illustrated environment 100 includes a service provider system 102, which is configurable in a variety of ways.

In variations, the service provider system 102 is or includes a computing device or multiple computing devices communicatively coupled to each other. The service provider system 102 supports operation of the modules and other systems described herein to implement a platform 122. The platform 122 is implemented as an electronic commerce (e-commerce) website or other online marketplace accessible to end users. End users access the platform 122 via electronic devices external to the service provider system 102. In this example, those devices include buyer computing device 112 and seller computing device 108. The external electronic devices are configurable as personal computers, smartphones, and so forth. The platform 122 is accessible to end-users over a network 104. The network 104 in some instances is the Internet.

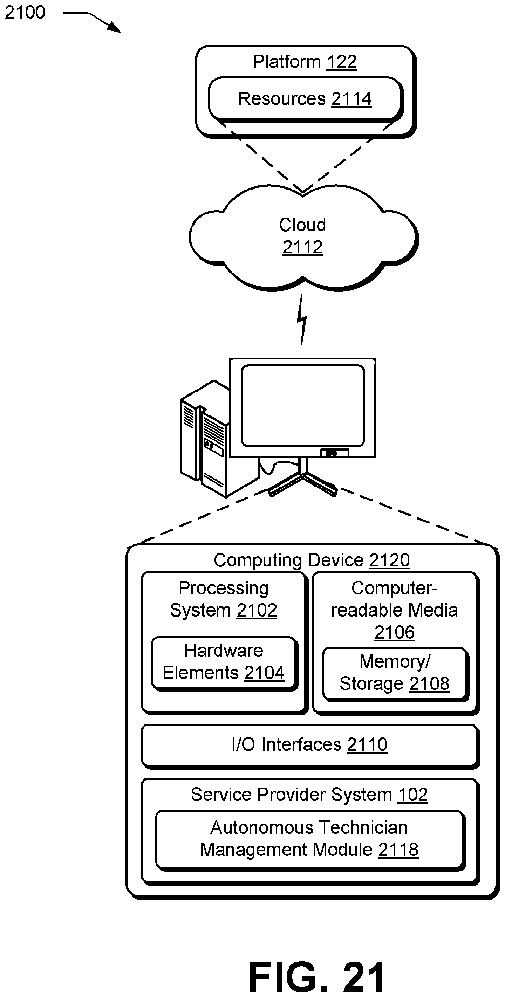

In one or more implementations, the service provider system 102 includes one or more of electronic storage media, transitory memory and non-transitory memory, one or more electronic processors, and other components configured to facilitate operation of the platform 122. The service provider system 102 in some instances includes multiple servers, databases, and/or other electronic devices to support storage of data, such as item listings, transaction data, buyer and seller profile information, and other data associated with operation of the service provider system 102 and/or content provided by the service provider system 102 to end users. In such configurations, the multiple servers and/or other electronic devices are utilized to perform operations "over the cloud" as described in relation to FIG. 21.

The service provider system 102 is also configured to communicate electronically with databases 106, such as for storage and retrieval of data associated with item listings. In one or more implementations, the databases 106 include non-transitory storage media configured to store data used in the listings of items. The data is retrieved by the service provider system 102 and is then provided to the external devices for browsing of the item listings through platform 122. Examples of item listing data include but are not limited to a digital image of the associated item, a video of the associated item, a price of the item, a written description of the item, a condition of the item, an ownership history of the item, and an authenticity designation of the item, to name just a few. The item listing data therefore represents a grouping of data. The data is associated with the item and is used to electronically publish the listing of the item.

In one or more implementations, the buyer computing device 112 utilizes an application such as a website browser to navigate to the platform 122. Alternatively or in addition, the buyer computing device 112 utilizes a separate application, such as a web-based application (e.g., a "mobile app") installed on the buyer computing device 112, to access user interfaces of the platform 122. The buyer computing device 112 further accesses the functionality and/or services of the platform 122 by extension of the user interfaces of the platform 122. In accordance with the described techniques, the buyer computing device 112 communicates a request to the service provider system 102 to view one or more item listings. The service provider system 102 then retrieves data associated with the item listings from the databases 106. The service provider system 102 further provides access to the item listings to the buyer computing device 112 via the platform 122.

Item listings are generated through interaction of seller computing devices with the service provider system 102. For example, the seller computing device 108 communicates information describing a component 110 to be offered for sale via an item listing to the service provider system 102 through use of the platform 122. The information describing the component 110 is stored within the databases 106 and is used to populate the item listing associated with the component 110 on the platform 122. The item listing is also stored within the databases 106 and is implemented as a webpage or other user interface (e.g., an item page within a web-based application) of the platform 122. The buyer computing device 112 is able to view the item listing through interaction with the platform 122 as described above.

In accordance with the described techniques, the service provider system 102 is also in electronic communication with one or more robots, such as robot 116. The one or more robots are referred to collectively herein as an autonomous technician 120. The autonomous technician 120 is implemented to perform operations such as component condition verification, component transport, and component installation, as above and below. In at least some implementations, the platform 122 deploys the autonomous technician 120 responsive to completion of a transaction through the platform 122.

As one example, consider a scenario in which a buyer, utilizing the buyer computing device 112, completes a transaction through the platform 122 to purchase the component 110 described by an item listing published by the platform 122. In this example, the component 110 is an accessory or replacement part for an apparatus 114 of the buyer. The service provider system 102 communicates a prompt to the buyer computing device 112 to confirm whether installation assistance for the component 110 is desired. In other words, the service provider system 102 prompts the buyer to select via a user interface whether or not to involve the autonomous technician 120, such as by deploying the autonomous technician 120 to perform one or more of verification, transportation, and/or installation of the component 110. In this scenario, the buyer computing device 112 responds by confirming that installation assistance is desired, e.g., by providing a selection via the user interface to deploy the autonomous technician 120. In this example, the confirmation indicates that the component 110 will be installed to the apparatus 114 of the buyer. Responsive to the confirmation, the service provider system 102 communicates deployment instructions to the autonomous technician 120. By way of example, the deployment instructions include, for instance, commands to perform one or more operations such as verifying a condition of the component 110, transporting the component to the location of the buyer, and installing the component 110 to the apparatus 114 of the buyer. In the continuing example, based on the instructions, the autonomous technician 120 is deployed and it verifies the component (e.g., at a location of the seller), transports the component to the apparatus 114, and installs the component 110 to the apparatus 114 to form the assembly 118.

Performing component verification via the autonomous technician 120 provides the technical effect of reducing occurrences of unexpected component incompatibility with devices of component buyers. Additionally, the operations performed by the autonomous technician 120 result in various other technical effects.

As one example, the autonomous technician 120 verifies the condition of the component 110. The autonomous technician detects the condition of the component 110 and compares the detected condition to the condition described by the item listing. This reduces a likelihood of degradation of the component 110 or other unexpected aspects of the component 110 interfering with installation of the component 110 to the apparatus 114. Additionally, the verification of the condition of the component 110 by the autonomous technician 120 can reduce or eliminate back-and-forth communications through the platform 122 that result from miscommunication of the condition of the component 110 in the item listing, which reduces a communication and/or processing load on the platform 122. Similarly, the verification reduces occurrences of return shipping communications through the platform 122, further reducing the communication and/or processing load on the platform 122.

The autonomous technician 120 further verifies the compatibility of the component 110 with the apparatus 114 by referencing one or more compatibility libraries after detecting the actual condition of the component 110. This provides an additional layer of assurance of the compatibility of the component 110 with the apparatus 114 by identifying potential issues not described in the item listing that can interfere with installation of the component 110.

In addition to the verification of the condition of the component 110, in one or more implementations, the autonomous technician 120 verifies the actual condition of the apparatus 114 prior to installation of the component 110 to the apparatus 114. Verifying the actual condition of the apparatus 114 includes detecting features of the apparatus 114 by assessing and/or measuring the apparatus 114 itself. As a result, the autonomous technician 120 can identify potential issues that may occur with installation of the component 110 to the apparatus 114 due to one or more conditions of the apparatus 114, e.g., previous modifications or installations made to the apparatus 114.

In one or more implementations, the autonomous technician 120 is configured to adapt to such conditions by updating the installation protocol for the component 110 and installing the component 110 to the apparatus having the detected one or more conditions using the updated protocol.

In situations in which information describing the apparatus 114 is stored to a profile of the buyer on the platform 122, the autonomous technician 120 can update the stored information based on the actual condition of the apparatus 114. This in turn increases an accuracy of the information describing the apparatus 114, which increases an ease and precision of further installations to the apparatus 114. Further, if the autonomous technician 120 detects an inconsistency in the information stored in the compatibility libraries based on the detected actual condition of the apparatus 114, the autonomous technician 120 can communicate with the databases 106 to update the compatibility libraries and/or installation protocols accordingly. This increases an accuracy of the compatibility information and effectiveness of installation protocols to increase success for future component installation operations.

By transporting the component 110 to the location of the apparatus 114, the autonomous technician 120 reduces an amount of time and/or cost associated with shipping the component 110. Further, because the location of the autonomous technician 120 is tracked by the service provider system 102, a precision of tracking the location of the component 110 as the component 110 travels with the robot 116 is increased relative to conventional delivery approaches such as a postal service. In one or more implementations, a form factor and/or structure of the robot 116 can reduce a likelihood of degradation of the component 110 while the component 110 is transported to the location of the apparatus 114 in comparison with conventional delivery approaches. For instance, the autonomous technician 120 can include multiple different robots. Based on the attributes of the component 110, a particular robot having a form factor and structure can be selected for deployment to increase support of the component 110 during transportation and reduce a likelihood of degradation of the component 110. In some instances, a weight capacity of the deployed robot is higher than a weight capacity associated with delivery of the component 110 via a postal service. Thus, the autonomous technician 120 supports transportation of components that would otherwise encounter difficulties with conventional delivery approaches.

Installing the component 110 to the apparatus 114 using the autonomous technician 120 increases a likelihood of installing the component 110 in accordance with installation instructions of the component 110 in comparison to other approaches, such as installation by humans. The autonomous technician 120 may also be more precise than a human installer when installing the component 110. Installing the component 110 in accordance with the installation instructions of the component 110 and with greater precision increases a reliability of the installation and/or durability of the resulting assembly 118. Such installation may also reduce a likelihood of unintended surface contact or occurrence of other adverse conditions that may result in degradation of portions of the apparatus 114 and/or component 110.

Further, the autonomous technician 120 may also support advanced and/or complicated installation protocols that would be difficult or impractical for humans to perform. For example, a shape and/or structure of the robot 116 can facilitate installation of the component 110 to areas of the apparatus 114 that are difficult or impossible for humans to access. The robot 116 further may employ devices with lifting capabilities to lift portions of the apparatus 114 and/or the component 110 that would otherwise be difficult or impossible for a human to lift. Additionally, following installation of the component 110 to the apparatus 114, the autonomous technician 120 is operable to verify the installed condition of the component 110 in the assembly 118 and/or test operation of the assembly 118 to confirm the quality of the installation.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

### Autonomous Technician Component Handling and Installation

The following discussion describes techniques for an autonomous technician that are implementable utilizing the described systems and devices. Aspects of the procedures are implemented in hardware, firmware, software, or a combination thereof. The procedures are shown as sets of blocks that specify operations performable by hardware and are not necessarily limited to the orders shown for performing the operations by the respective blocks. Blocks of the procedures, for instance, specify operations programmable by hardware (e.g., processor, microprocessor, controller, firmware) as instructions thereby creating a special purpose machine for carrying out an algorithm as illustrated by the flow diagram. As a result, the instructions are storable on a computer-readable storage medium that causes the hardware to perform the algorithm.

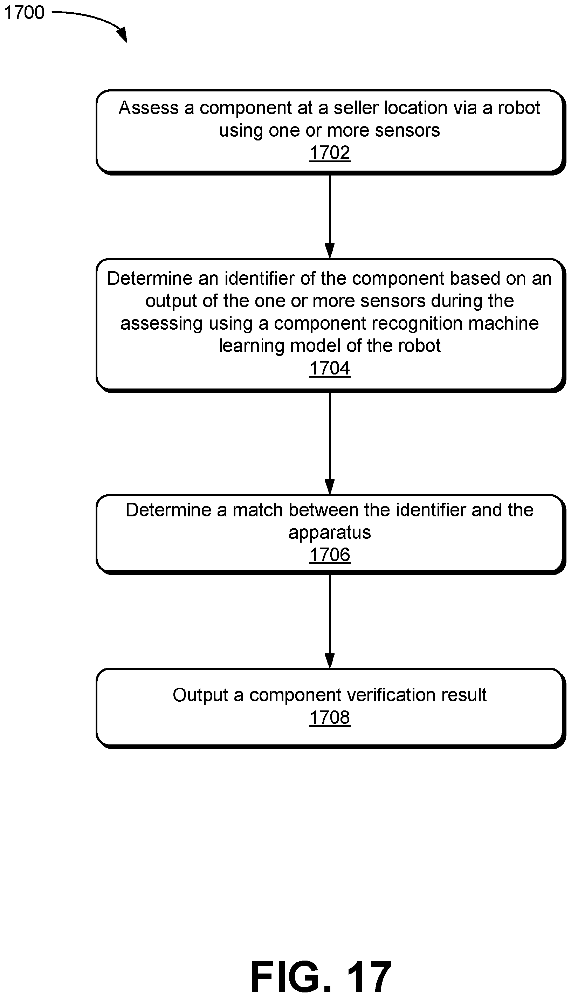

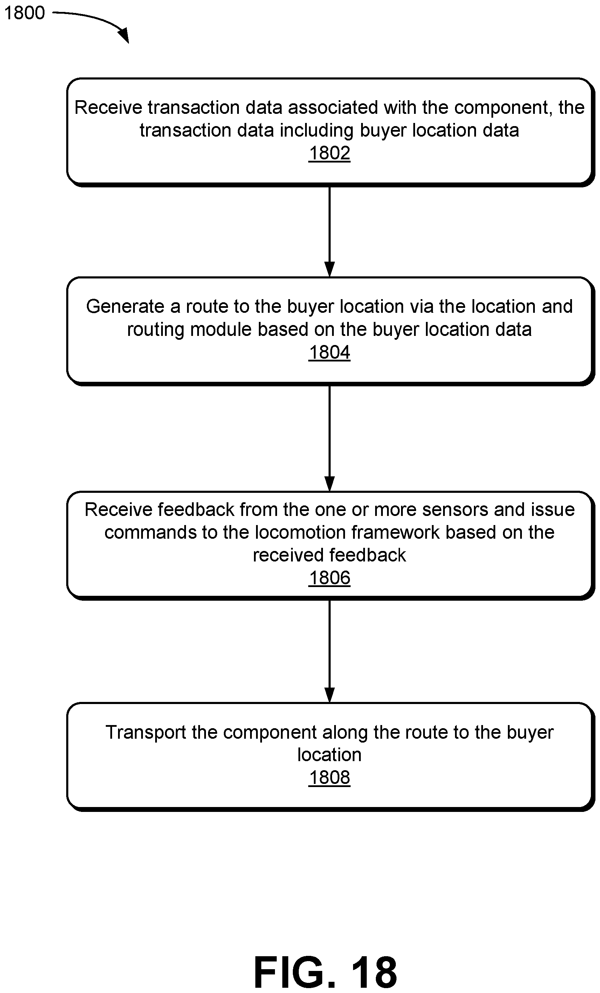

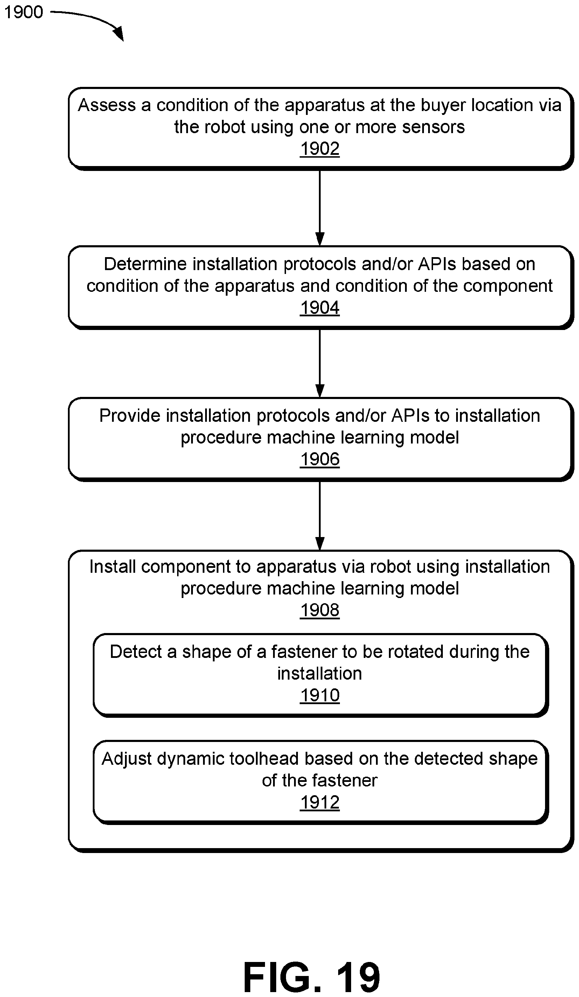

FIGS. 17-19 show flow diagrams depicting algorithms as step-by-step procedures. In particular, FIG. 17 depicts procedure 1700 for verifying a condition of a component via an autonomous technician, FIG. 18 depicts procedure 1800 for transporting a component to a location of a buyer via an autonomous technician, and FIG. 19 depicts procedure 1900 for installing a component to an apparatus of a buyer via an autonomous technician. In portions of the following discussion, reference will be made to FIGS. 1-16 in parallel with the procedure 1700 of FIG. 17, the procedure 1800 of FIG. 18, and the procedure 1900 of FIG. 19. In some implementations, the procedures depicted by FIGS. 17-19 are performed via a single robot of an autonomous technician, e.g., the robot 116, while in others the procedures are performed by one or more robots.

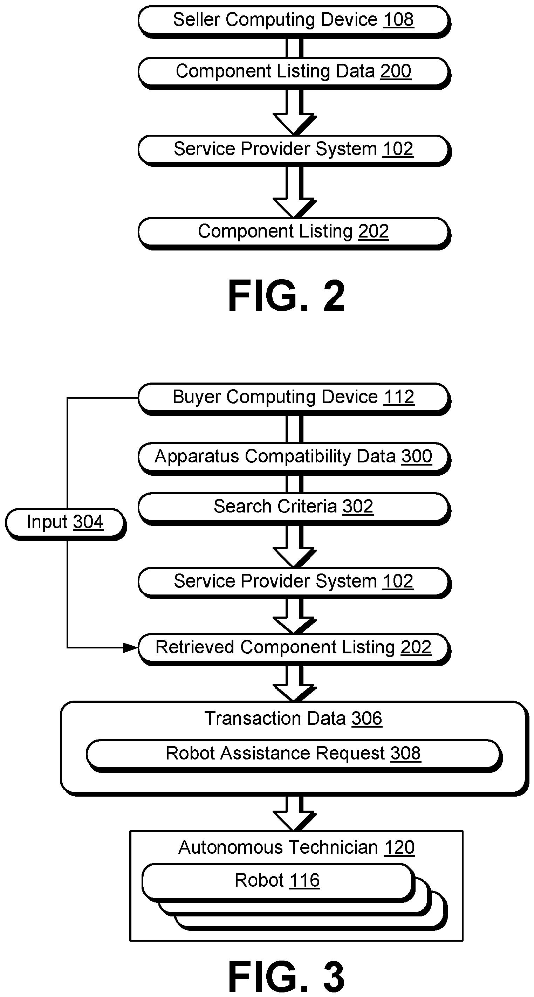

Referring to FIG. 2, an example implementation of service provider system 102 is shown, depicting operations for generating a component listing 202. In this example, a seller inputs information describing an item to be listed via the platform 122 implemented by the service provider system 102. The item is a component for a device or apparatus, such as a part for installation to a vehicle. The seller computing device 108 communicates the information input by the seller to the service provider system 102, which is represented as component listing data 200. Responsive to receiving the component listing data 200, the service provider system 102 generates and publishes the component listing 202. The component listing 202 includes the information about the component (e.g., the item) provided by the seller based on received inputs or otherwise associated with the component listing 202, e.g., generated automatically by one or more machine learning models. By way of example and not limitation, the component listing data 200 includes one or more of digital images of the component, video of the component, text descriptions of the component, selected categories of the component, selected or described condition of the component, description of wear of the component, description of compatibility of the component, make and/or model of the component, price of the component, description of similar components, ownership history, and so on. The component listing 202 is stored using one or more databases of the service provider system 102, such as the databases 106.

Referring to FIG. 3, an example implementation depicting operations for generating a robot assistance request 308 responsive to a transaction involving an item listing is shown. In the example, a buyer utilizes the buyer computing device 112 to communicate information to the service provider system 102 through the platform 122. The communicated information includes apparatus compatibility data 300 and search criteria 302.

The apparatus compatibility data 300 includes information describing the apparatus 114 of the buyer. Such information includes, for example, a make and/or model of the apparatus 114, a manufacturer of the apparatus 114, a date of manufacture of the apparatus 114, one or more images of the apparatus 114 or portions of the apparatus 114, one or more videos of the apparatus 114 or portions of the apparatus 114, and so forth. It is to be appreciated that the compatibility data 300 may include a variety of information and/or types of information that describe or otherwise convey aspects about the apparatus 114 which relate to its compatibility without departing from the spirit or scope of the described techniques. The apparatus compatibility data 300 is utilized by the service provider system 102 to filter search results provided to the buyer, as described below.

The search criteria 302 includes information describing a component sought for purchase for installation to the apparatus 114 of the buyer. For example, the search criteria 302 is a search query that includes one or more of text, voice, images, or video. In one instance, the apparatus 114 is a vehicle, and the search criteria 302 specifies a type of vehicle component, such as a vehicle radio.

The service provider system 102 receives the apparatus compatibility data 300 and the search criteria 302. The service provider system 102 then communicates at least one retrieved item listing to the buyer computing device 112 based on the apparatus compatibility data 300 and the search criteria 302. One such item listing is component listing 202. The service provider system 102 identifies the component listing 202 from a plurality of item listings using the apparatus compatibility data 300 and the search criteria 302.

In at least one implementation, the service provider system 102 determines a first set of item listings from the plurality of item listings based on the apparatus compatibility data 300. The item listings within the first set of item listings are associated with items that are compatible with the apparatus 114 (for installation to the apparatus 114) according to information included in the item listings. The service provider system 102 determines whether the items are compatible with the apparatus 114 by comparing the apparatus compatibility data 300 to data within one or more compatibility libraries of the databases 106 and/or to data included in the item listings which may indicate compatibility, e.g., a list of makes and/or models with which the component of the item listing is compatible.

The service provider system 102 further determines a second set of item listings from the first set of item listings. The second set of item listings is a subset of the first set of item listings and is based on the search criteria 302, e.g., item listings that further match the search criteria 302. Thus, the second set of listings includes listings from the first set that additionally conform to the search criteria 302. As noted above, the search criteria 302 may specify a particular type of item or component, and the search criteria 302 is usable to further filter the set of item listings for components that are determined compatible with the apparatus 114.

Consider a scenario in which the apparatus 114 is a vehicle of a particular make and model. In one or more implementations, the first set of item listings includes listings for components that are compatible with the vehicle of the particular make and model. Further in this scenario, the search criteria 302 describes a particular type of item, such as vehicle radios. The first set of listings thus includes listings for components that are compatible with the vehicle, and the second set of listings includes listings for vehicle radios that are compatible with the vehicle.

Although in this scenario the service provider system 102 determines the first set of item listings from the apparatus compatibility data 300 and determines the second set of item listings from the first set of item listings, in some cases these operations are reversed. For instance, the service provider system 102 may determine a first set of item listings based on the search criteria, and determine the second set of item listings from the first set based on the apparatus compatibility data 300.

In order to complete the transaction for the component 110, the buyer computing device 112 provides input 304 which is received by service provider system 102. In one or more implementations, the input 304 includes data for executing the transaction for the component 110, examples of which include electronic communication of payment information, buyer location information, delivery selection information, and so forth. The information associated with the completed transaction is represented as transaction data 306.

In at least one implementation, the input 304 includes confirmation that installation assistance for the component 110 is requested, e.g., as robot assistance request 308. In accordance with the described techniques, the service provider system 102 communicates the transaction data 306 and the robot assistance request 308 to the autonomous technician 120 as part of instructions for deployment of the autonomous technician 120. As a result, the autonomous technician 120 is deployed to perform at least one of item verification, item transportation, and/or item installation operations as described herein via one or more robots, such as the robot 116.

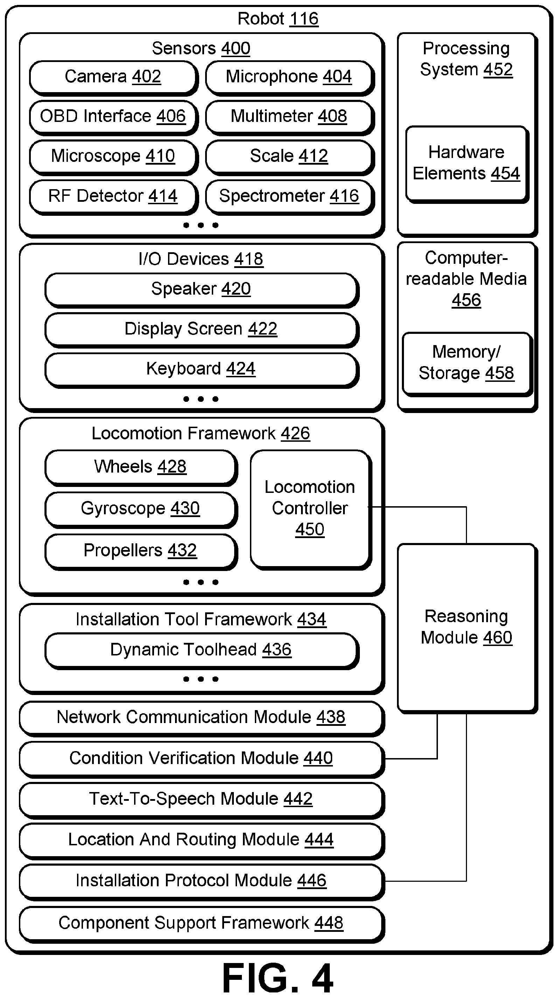

Referring to FIG. 4, one example implementation of the robot 116 is shown. The robot 116 includes various modules and components which enable the robot 116 to perform one or more operations, such as component condition verification, component transportation, and component installation. It is to be appreciated that a robot configured to perform any one or more or portions of those operations may include more, different, or fewer components than depicted in FIG. 4 without departing from the spirit or scope of the described techniques.

Alternatively or additionally, the robot 116 is one of two or more robots employed by the autonomous technician 120 to perform any of the various operations described herein. Each of the two or more robots may include various subsets, all, or different components of the configuration depicted in FIG. 4. As one example, the autonomous technician 120 is configurable to include a first robot and a second robot, where the first robot includes a condition verification module 440 and does not include an installation tool framework 434, and where the second robot includes the installation tool framework 434 and does not include the condition verification module 440.

In this example, the depicted robot 116 includes sensors 400. The sensors 400 are employed by the robot 116 to sense conditions within an environment of the robot 116 and/or measure parameters associated with an item (e.g., component 110). The sensors 400 may include, in one or more implementations, at least one of a camera 402, a microphone 404, an on-board diagnostics (OBD) interface 406, a multimeter 408, a microscope 410, a scale 412, a radio frequency (RF) detector 414, and a spectrometer 416, to name a few. In some implementations, the robot 116 includes different, fewer, or additional sensors, and/or one or more of the sensors shown in FIG. 4 are omitted.

In at least one scenario, the robot 116 uses sensors 400 to perform verification of a condition of an item involved in a transaction through an item listing. Performing the condition verification includes electronic communication between the sensors 400 and the condition verification module 440. The condition verification module 440 receives measurements and/or other data from the sensors 400 and provides commands to control the sensors 400 (and/or architectures of the robot 116) to acquire those measurements and/or other data. In performing the verification of the item condition, the robot 116 may, for instance, capture digital image data of the item via the camera 402, the microscope 410, and/or the spectrometer 416. The robot 116 may then compare the captured digital image data to other reference digital image data, such as digital images of the item provided by the manufacturer that are maintained in the database 106. Based on the comparison, the robot 116 determines whether the condition of the item matches (or substantially matches) the condition represented by the reference data. In one or more implementations, this determination may be performed by employing one or more machine learning models to analyze the digital image data acquired via the sensors and compare the data to the reference digital image data.

In at least one implementation, the determination includes matching one or more identifiers of the item indicated by the reference data to one or more identifiers or identifying features identified in the digital images acquired by the sensors 400. For instance, the one or more machine learning models are trained to perform image recognition operations such as edge detection, image segmentation, pattern detection, and so forth to identify identifiers or identifying features within the digital images.

Further, in some implementations, the robot 116 acquires other data from the sensors 400 and compares such other acquired data to other reference data included within databases 106. For instance, the robot 116 acquires a weight of the item via a scale 412 and compares the weight to an expected weight for the item stored in the reference data. Based on the comparison, the robot 116 determines whether the measured weight is within a tolerance of the reference weight (e.g., less than 5% difference from the reference weight). The reference weight and the measured weight are thus identifiers of the item that are matched by the robot 116. The item condition verification performed by the robot 116 includes multiple operations in some examples, such as determining that the visual appearance of the item matches the visual appearance represented by the reference data, the measured weight of the item matches the reference weight, and so forth.

The robot 116 additionally includes input/output devices 418 providing an interface between persons within a proximity of the robot 116 and various control modules and other components of the robot 116. The robot 116 is shown including a speaker 420 configured to output audio signals, a display screen 422 configured to output information for display, and a keyboard 424 configured to receive input for communication between individuals and the robot 116. In some implementations, the input/output devices 418 include a different configuration with more, fewer, or different input/output devices 418.

In one or more implementations, the input/output devices 418 communicate with a text-to-speech module 442, such as to convert text data to audio signals and vice-versa. For example, the robot 116 receives text input via the keyboard 424 and outputs audio signals via speaker 420, including speech based on the textual data. In one or more implementations, microphone 404 is used by the text-to-speech module 442 to receive audio signals, and the text-to-speech module 442 converts the received audio signals to textual data. In one or more implementations, the robot 116 is able to communicate with the buyer through the buyer computing device 112 and/or communicate with the seller through the seller computing device 108. Those communications may include, for instance, electronic communications transmitted to the buyer computing device 112 and/or the seller computing device 108, such as by using a short-range wireless transmitter integrated into a network communication module 438. Alternatively or additionally, the robot 116 communicates electronically with the service provider system 102, which then communicates electronically with the buyer computing device 112 and/or the seller computing device 108 to provide communications related to operation of the robot 116 to the buyer and/or to the seller.

In at least one implementation, the robot 116 includes a locomotion framework 426 with components employed to support locomotion of the robot 116, e.g., travel of the robot 116 from one location to another. The locomotion framework 426 is shown including wheels 428, a gyroscope 430, propellers 432, and a locomotion controller 450. It is to be appreciated, however, that the locomotion framework 426 can include more, different, or fewer components to support movement of the robot without departing from the spirit or scope of the described techniques.

By way of example, the wheels 428 are employed by the robot 116 for ground travel, and the propellers 432 are employed by the robot 116 for aerial travel. In some implementations, the robot 116 is configured as an unmanned aerial vehicle (UAV), also referred to as a drone. However, in other implementations, the robot 116 includes wheels 428 or other devices for ground travel and does not include the propellers 432. The gyroscope 430 supports upright travel of the robot 116 and travel of the robot 116 over diverse ground terrain, such as unpaved land.

In one or more implementations, the locomotion controller 450 controls operation of the components of the locomotion framework 426 based on signals received at the locomotion controller 450 from the sensors 400. Such signals may include, for instance, one or more of image data from the camera 402 and audio data from the microphone 404. The locomotion controller 450 additionally receives signals and data from a location and routing module 444, such as data describing a geographical location of the robot 116. In some implementations, the robot 116 is a stationary robot and does not include the locomotion framework 426.

The locomotion framework 426 is configured to communicate electronically with the location and routing module 444 for locomotion of the robot 116. The location and routing module 444 processes location data of the robot 116, such as data describing a geographical location of the robot 116. The location data is acquired via the network communication module 438 by the robot 116 via communication with one or more sources of location data, such as global positioning systems, wireless routers, cellular network components, and so forth. The location and routing module 444 identifies the geographical location of the robot 116 and may generate travel routes for the robot 116 based on the location data of the robot as well as based on other entities.

In one example scenario, the robot 116 receives the transaction data 306. The location and routing module 444 processes the transaction data 306 and generates at least a portion of a route to a location of the seller with the component 110. Alternatively or additionally, the location and routing module 444 generates at least a portion of a route to a location of the buyer associated with the apparatus 114. The location and routing module 444 further communicates electronically with the locomotion framework 426 to support the travel of the robot 116 along the one or more routes.

The robot 116 is shown including the installation tool framework 434. The installation tool framework 434 includes components configured to support installation of items to other devices. For instance, the robot 116 employs the installation tool framework 434 to install the component 110 to the apparatus 114. In one or more implementations, the installation tool framework 434 includes a dynamic toolhead 436, as described in further detail below. Alternatively or additionally, the robot 116 includes and/or controls one or more of a plurality of different tools. In one or more implementations, the robot 116 controls the dynamic toolhead 436 and/or any of a plurality of different tools to install the component 110 to the apparatus 114. In one or more scenarios, the robot 116 removes a different component from the apparatus 114 prior to installing the component 110. For example, the robot 116 employs the installation tool framework 434 to replace a component of the apparatus 114 with the component 110. Alternatively or additionally, the robot 116 employs the installation tool framework 434 to at least partially remove or disassemble a component of the apparatus 114 and then install the component 110. In at least one scenario, the robot 116 further employs the installation tool framework 434 to at least partially reinstall or reassemble the at least partially removed or disassembled component after the component 110 is installed.

To install components, in one or more implementations, the installation tool framework 434 receives instructions and/or commands for installation of the components to one or more other devices or apparatuses. For example, the installation tool framework 434 receives such instructions and/or commands through electronic communication with an installation protocol module 446. In at least one scenario, for instance, the robot 116 receives the transaction data 306 including information regarding the described condition of the component 110 as provided by the seller. Using the transaction data 306, the robot 116 communicates with the service provider system 102 and the databases 106 to receive installation protocols related to the installation of the component 110 to the apparatus 114 of the buyer. As described further below, the installation protocol module 446 includes one or more machine learning models that control operations performed using the installation tool framework 434 through the installation protocol module 446.

In one or more implementations, the robot 116 further includes a component support framework 448. In at least one implementation, the robot 116 uses the component support framework 448 in combination with the installation tool framework 434 while performing installation of components to other devices. By way of example, the component support framework 448 includes various grasping implements and other devices that stabilize the apparatus 114 relative to the robot 116 to increase an ease of installation of components to the apparatus. The component support framework 448 is described in greater detail below. In some implementations, the robot 116 controls devices of the component support framework 448 at least in part through electronic communication with the installation protocol module 446. For instance, the robot 116 uses the installation protocol module 446 to issue commands to the component support framework 448 to control devices of the component support framework 448 for installation of components to other devices.

In one or more implementations, the robot 116 communicates electronically with the service provider system 102 via the network communication module 438. The electronic communications via the network communication module 438 include wired or wireless communications. As one example, the robot 116 communicates wirelessly with the service provider system 102 via the network communication module 438 using a cellular telecommunications network. Alternatively or additionally, the robot 116 communicates wirelessly with the service provider system 102 via the network communication module 438 using a wireless (e.g., Wi-Fi) network. Indeed, other communication protocols and/or networks may be used in accordance with the described techniques. In one or more scenarios, the communications are transmitted over the network 104.

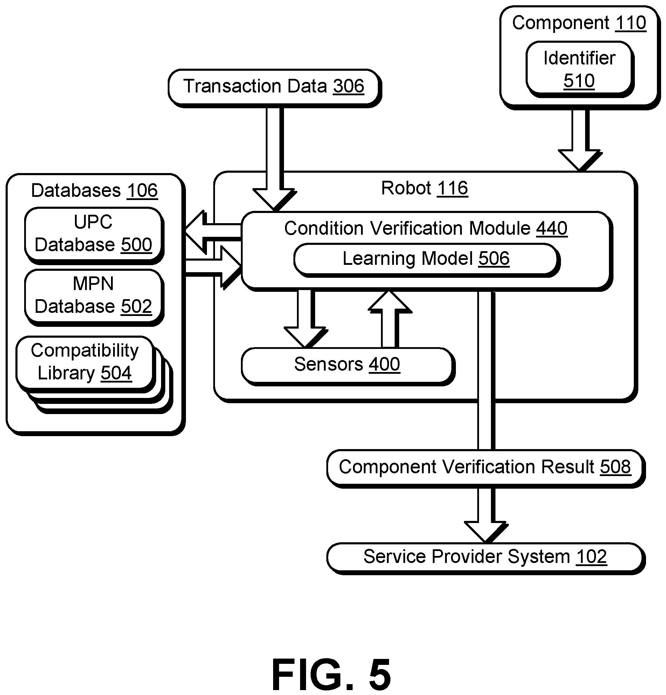

In some implementations, the robot 116 includes additional components not shown by FIG. 5. For instance, the robot 116 is configurable to include one or more batteries configured to supply power to the electronic components of the robot 116. The robot 116 is additionally configurable to include a wired power connection, such as a cabled power supply.

In the illustrated example, the robot 116 includes a reasoning module 460. In one or more implementations, the reasoning module 460 coordinates communication between the various components of the robot 116. For instance, the reasoning module 460 controls electronic communication between the condition verification module 440, the installation protocol module 446, and the locomotion controller 450. The robot 116 thus employs the reasoning module 460 to coordinate and otherwise manage the operations described herein that relate individually to the condition verification module 440, the installation protocol module 446, and the locomotion controller 450. As one scenario, the reasoning module 460 activates the condition verification module 440 to perform component verification. The reasoning module 460 then electronically controls or activates other components of the robot 116 responsive to a result of the component verification.

The robot 116 as illustrated includes a processing system 452, one or more computer-readable media 456, and the input/output devices 418 that are communicatively coupled, one to another. Although not shown, the robot 116 further includes a system bus or other data and command transfer system that couples the various components, one to another. For example, a system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 452 is representative of functionality to perform one or more operations using hardware. Accordingly, the processing system 452 is illustrated as including hardware elements 454 that are configured as processors, functional blocks, and so forth. This includes example implementations in hardware as a system specific integrated circuit or other logic device formed using one or more semiconductors. The hardware elements 454 are not limited by the materials from which they are formed or the processing mechanisms employed therein. For example, processors are comprised of semiconductor(s) and/or transistors (e.g., electronic integrated circuits (ICs)). In such a context, processor-executable instructions are, for example, electronically-executable instructions.

The computer-readable media 456 is illustrated as including memory/storage 458. The memory/storage 458 represents memory/storage capacity associated with one or more computer-readable media. In one example, the memory/storage 458 includes volatile media (such as random access memory (RAM)) and/or nonvolatile media (such as read only memory (ROM), Flash memory, optical disks, magnetic disks, and so forth). In another example, the memory/storage 458 includes fixed media (e.g., RAM, ROM, a fixed hard drive, and so on) as well as removable media (e.g., Flash memory, a removable hard drive, an optical disc, and so forth). The computer-readable media 456 is configurable in a variety of other ways as further described below.

The input/output devices 418 are representative of functionality to allow user input to enter commands and information to the robot 116, and also allow information to be presented via other components or devices using various input/output devices. Examples of input devices include the keyboard 424, a cursor control device (e.g., a mouse), an additional microphone or the microphone 404, a scanner, touch functionality (e.g., capacitive or other sensors that are configured to detect physical touch), an additional camera or the camera 402 (e.g., which employs visible and/or non-visible wavelengths such as infrared frequencies to recognize movement as gestures that do not involve touch), and so forth. Examples of output devices include the display screen 422 (e.g., a monitor or projector), the speaker 420, a printer, a network card, tactile-response device, and so forth. Thus, the robot 116 is configurable in a variety of ways to support user interaction.

Implementations of the described modules and techniques are storable on or transmitted across some form of computer-readable media. For example, the computer-readable media includes a variety of media that is accessible to the service provider system 102. By way of example, and not limitation, computer-readable media includes "computer-readable storage media" and "computer-readable signal media."

As previously described, the hardware elements 454 and the computer-readable media 456 are representative of modules, programmable device logic and/or fixed device logic implemented in a hardware form that is employable in some implementations to implement at least some aspects of the techniques described herein, such as to perform one or more instructions. Hardware includes components of an integrated circuit or on-chip system, a system-specific integrated circuit (ASIC), a field-programmable gate array (FPGA), a complex programmable logic device (CPLD), and other implementations in silicon or other hardware. In this context, hardware operates as a computing device that performs program tasks defined by instructions and/or logic embodied by the hardware as well as a hardware utilized to store instructions for execution, e.g., the computer-readable storage media described previously.

Combinations of the foregoing are also employable to implement various techniques described herein. Accordingly, software, hardware, or executable modules are implementable as one or more instructions and/or logic embodied on some form of computer-readable storage media and/or by one or more the hardware elements 454. For example, the robot 116 is configured to implement particular instructions and/or functions corresponding to the software and/or hardware modules. Accordingly, implementation of a module that is executable by the robot 116 as software is achieved at least partially in hardware, e.g., through use of computer-readable storage media and/or the hardware elements 454 of the processing system 452. The instructions and/or functions are executable/operable by one or more articles of manufacture (for example, processing systems 452) to implement techniques, modules, and examples described herein.

The techniques described herein are supportable by various configurations of the robot 116 and are not limited to the specific examples of the techniques described herein. This functionality is also implementable entirely or partially through use of a distributed system, such as over a "cloud," similar to the example cloud shown by FIG. 21 and described further below.

Referring to FIG. 5, an implementation example depicting operations for component condition verification is shown. In the depicted implementation, the robot 116 is at a location of the seller and the component 110. For instance, following completion of a transaction involving the component listing 202, the robot 116 is deployed by the service provider system 102 to perform condition verification of the component 110. In some scenarios, the robot 116 travels to the location of the seller and the component 110 using the locomotion framework 426. In other scenarios, the seller or the platform 122 transports or otherwise delivers the component 110 to the location of the robot 116 for verification of the condition of the component 110 by the robot 116. The robot 116 is deployable from a location such as a warehouse or other hub that serves as a storage location for the robot 116 during conditions in which the robot 116 is not in use.

The robot 116 receives the transaction data 306 and the component 110. The robot 116 assesses the component by acquiring data describing the component 110 via the sensors 400 (block 1702 of FIG. 17). The data describing the component 110 includes, for instance, digital images of the component 110, a weight measurement of the component 110, size measurements of the component 110, and so forth. The data is provided to the condition verification module 440 which performs the component condition verification, e.g., by using a machine learning model 506. The machine learning model 506 is referred to herein as a component recognition machine learning model. In some implementations, the machine learning model 506 is a deep neural network trained on data describing various types of components. The condition verification module 440 employs the machine learning model 506 to determine identifiers of the component 110, such as identifier 510, that match known identifiers stored in the databases 106 (block 1704 of FIG. 17). The machine learning model 506 is trained on data describing a plurality of component identifiers that the machine learning model 506 leverages to detect identifiers of the component 110 (and other components provided to the robot 116 for condition verification). In one or more implementations, the machine learning model 506 performs operations such as image recognition, image content matching, and similarity analysis, to name a few.

The condition verification module 440 communicates with the databases 106 via the network communication module 438 to retrieve reference data used in performing operations for component condition verification. The reference data may include data from a universal purchase code (UPC) database 500, a manufacturer part number (MPN) database 502, one or more compatibility libraries such as compatibility library 504, and so forth.

As noted above, the robot 116 may acquire data describing the component 110 via the sensors 400, such as digital images of the actual condition of the component 110. The robot 116 employs machine learning model 506 to determine one or more identifiers of the component 110 that are used to verify the condition of the component 110. One such identifier 510 includes a visible manufacturer part number, such as a part number stamped into the component 110 or included on a sticker affixed to the component 110. Additionally and/or alternatively, the visible manufacturer part number may be included on packaging of the component 110 and acquiring the data describing the component 110 via the sensors 400 may include acquiring the visible manufacturer part number from the packaging of the component 110.

The condition verification module 440 detects the manufacturer part number and compares the detected manufacturer part number to a plurality of part numbers, such as from the MPN database 502 associated with various components. The condition verification module 440 confirms that the detected manufacturer part number matches a part number included in the MPN database 502 that is associated with a component. The condition verification module 440 further compares the other detected identifiers to reference data from the databases 106 to confirm whether the identifiers match the reference data associated with component identified by the matched part number in the MPN database 502. Based on the matching of the identifiers, the condition verification module 440 determines that the component 110 is the same brand and/or make as the component identified by the matched part number in the MPN database 502.

Other example identifiers include, but are not limited to, a relative arrangement of edges and/or surfaces of the component 110, a measured size of the component 110, a texture and/or patterning of the component 110, a material of the component 110, a color of the component 110, a translucency or transparency of the component 110, a reflectivity of the component 110, a labeling of the component 110 (e.g., via stamping, stickers, printing, etc.), and a sound produced by the component 110, among others.

In one or more implementations, the condition verification module 440 compares the identified component 110 to the description of the component 110 included in the component listing 202. For instance, the condition verification module 440 processes the data acquired via the sensors 400 using the machine learning model 506 to determine attributes of the component 110, such as wear, missing features, surface finish and/or texture, weight, and/or density, to name a few. The condition verification module 440 then determines whether the description of the component 110 from the component listing 202 matches the actual condition of the component 110 based on the determined attributes. Other example characteristics of the component 110 that are detectable via the sensors 400 and the condition verification module 440 include connectivity of wireless communication connections of the component 110 through use of the RF detector 414, continuity of electrical circuits or other portions of the component 110 through use of the multimeter 408, connectivity of electronic ports of the component 110 through use of the OBD interface 406, filter degradation of the component 110 through use of a particulate detector (not shown), and so on.

The condition verification module 440 further determines whether the component 110 is compatible with the apparatus 114 based on the detected identifiers. For instance, data received by the robot 116 from compatibility library 504 indicates various components that are compatible for installation to the apparatus 114 (based on the apparatus compatibility data 300). The robot 116 identifies the condition of the component 110 based on the identifiers as described above and determines whether the data from the compatibility library 504 indicates that the component 110 is compatible for installation to the apparatus 114.

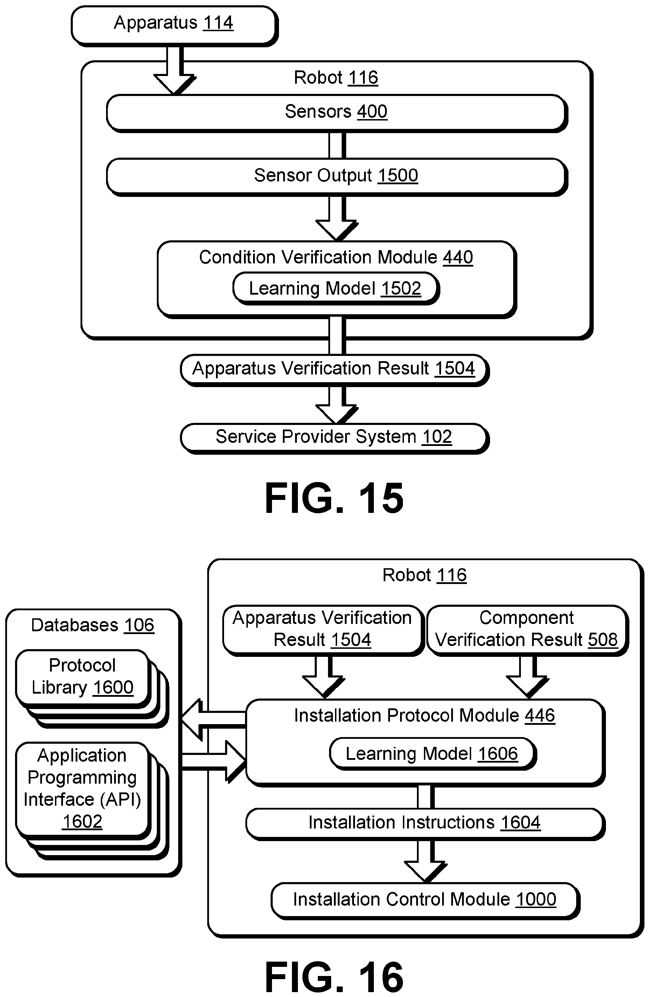

The compatibility of the component 110 with the apparatus 114 may also depend on an actual condition of the apparatus 114. For instance, although apparatus compatibility data 300 describes the apparatus 114, the actual condition of apparatus 114 may be different than the condition described by apparatus compatibility data 300, such as due to modification, erroneous documentation, wear, manufacture errors, and so on. In order to verify the actual condition of the apparatus 114, the robot 116 may perform additional verification operations in relation to the apparatus 114 as described further below with reference to FIG. 15.

The condition verification module 440 compares the detected identifiers of the component 110 to known reference identifiers included in the compatibility library 504, UPC database 500, and/or MPN database 502 that are associated with various apparatuses to determine the compatibility of the component 110 with the apparatus 114 (block 1706 shown by FIG. 17). Consider a scenario in which the apparatus 114 is a vehicle of a particular make and model. Within the compatibility library 504, the particular make and model of the vehicle is associated with data describing various identifiers, e.g., serial numbers of parts that are compatible with the make and model of the vehicle. The identifiers associated with the particular make and model of the vehicle include, for instance, a particular electronic connection assembly for a vehicle radio, a particular wheel size, a particular air filter housing length, and so forth.

The condition verification module 440 compares the detected identifiers of the component 110 to the identifiers in the compatibility library 504 associated with the particular make and model of the vehicle to determine matches between the identifiers. In this example scenario, the component 110 is a vehicle air filter. The condition verification module 440 detects a length of the component 110, e.g., via measurement of the component 110 through sensors 400, and stores the detected length as an identifier of the component 110. The condition verification module 440 then compares the detected length of component 110 to an air filter housing length identifier associated with the apparatus 114 in compatibility library 504 to determine whether the component 110 is compatible with the vehicle, e.g., whether the component 110 fits within the air filter housing of the vehicle.

The condition verification module 440 outputs a component verification result 508, such as to the service provider system 102 (block 1708 of FIG. 17). The component verification result 508 indicates whether the actual condition of the component 110 matches the condition as described in the component listing 202. If the condition matches, the service provider system 102 commands the robot 116 (or another robot of the autonomous technician 120) to transport the component to the location of the buyer for installation of the component to the apparatus 114 of the buyer.

However, if the condition does not match, the service provider system 102 performs a different set of operations. In some implementations, if the condition does not match, the service provider system 102 provides a notification or alert to the buyer through the platform 122, via text message, or via another type of communication to indicate that the condition of the component 110 is different than the condition as described in the component listing 202. The service provider system 102 prompts the buyer for confirmation to proceed with delivery of the component or to cancel the transaction. In some implementations, the service provider system 102 cancels the transaction and suggests alternate component listings for similar components to the buyer. Other responses are also possible without departing from the described techniques.

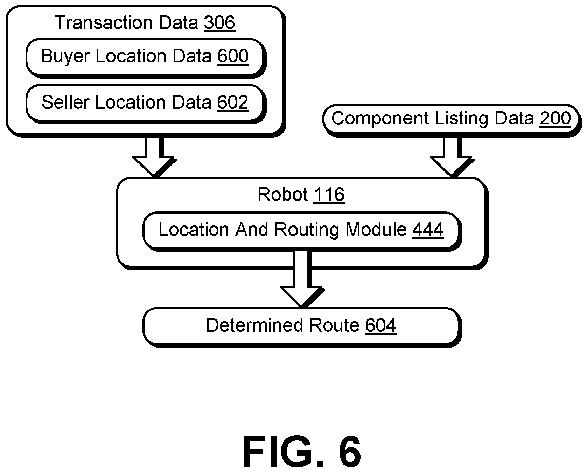

Referring to FIG. 6, an implementation depicting operations for determining a travel route of the robot 116 of the autonomous technician 120 is shown. The robot 116 includes the location and routing module 444 which receives the transaction data 306 and the component listing data 200 (block 1802 of FIG. 18). The transaction data 306 includes data describing a location of the component 110 (e.g., a first location such as a warehouse, fulfillment center, home of the seller, etc.) and data describing a location of the apparatus 114 (e.g., a second location such as a repair facility, holding center, home of the buyer, etc.). The autonomous technician verifies the component 110 at the first location for the apparatus 114 at the second location. In at least one implementation as described below, the first location is the location of the seller of the component 110, and the second location is the location of the buyer of the component 110.

In at least one implementation, the transaction data 306 includes buyer location data 600 and seller location data 602. The buyer location data 600 includes data identifying a location (e.g., physical address) of the buyer with the apparatus 114, and the seller location data 602 includes data identifying a location of the seller with the component 110. The buyer location data 600 and the seller location data 602 are acquired during the transaction for the component 110, e.g., extracted from user profiles of each of the buyer and the seller and/or entered into a user interface as part of executing the transaction. In some situations, the buyer inputs the buyer location data 600 while completing the transaction and the seller inputs the seller location data 602 during generation of the component listing 202 associated with the component 110. In some instances, the seller location data 602 is acquired directly from the component listing data 200. The buyer location data 600 (e.g., destination) and the seller location data 602 (e.g., starting location or origin) are stored by the service provider system 102. In one or more implementations, the service provider system 102 provides the route starting location and destination location to the location and routing module 444 of the robot 116 in coordination with the robot assistance request 308.

The location and routing module 444 receives the buyer location data 600 and the seller location data 602 and generates a determined route 604 for the robot 116, e.g., based on the location of the buyer and the location of the seller (block 1804 of FIG. 18). In some cases, the determined route 604 includes a first stage from a starting location of the robot 116 (e.g., a warehouse or other previous location) to the location of the seller, a second stage from the location of the seller to the location of the buyer, and a third stage, such as from the location of the buyer to return to the starting location or to a next location for performing one or more of component verification, component transportation, or component installation.

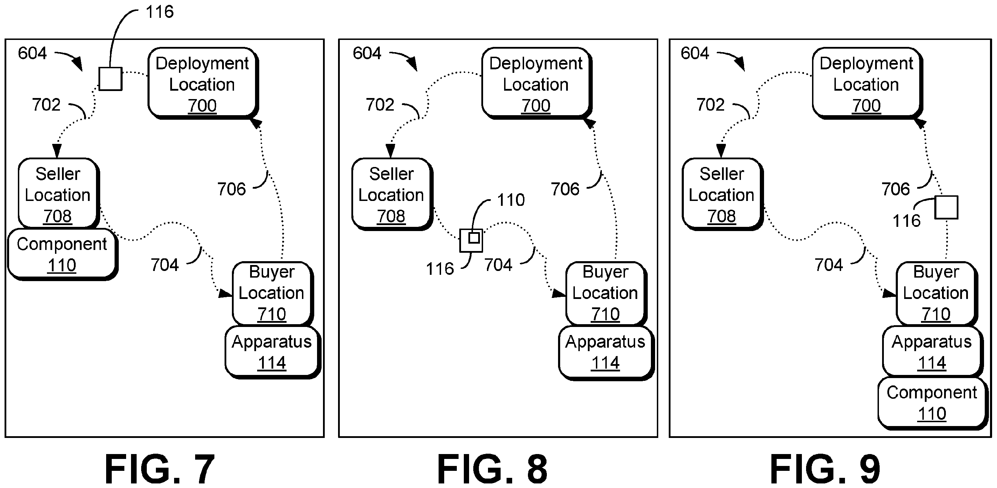

FIGS. 7-9 illustrate examples of determined routes 604. A deployment location 700 indicates the starting location of the robot 116, e.g., the location of the robot 116 prior to initiation of travel of the robot 116 to a seller location 708, e.g., a first location. In one or more implementations, this first location is associated with a seller, such as a seller's residence, a workplace of the seller, or a location where the seller has specified to meet the autonomous technician, to name just a few. In at least one scenario, the seller location, e.g., the first location, corresponds to a location associated with the platform 122, such as a warehouse utilized by the platform 122.

The robot 116, indicated schematically in FIG. 7, travels along a first stage 702 of the determined route 604 from the deployment location 700 toward the seller location 708. The locomotion framework 426 supports the travel (e.g., by ground and/or by air) of the robot 116 along the determined route 604. The locomotion controller 450 included by the locomotion framework 426 receives signals and other feedback from the sensors 400 and the location and routing module 444 (block 1806 of FIG. 18), and the locomotion controller 450 issues commands to other components of the locomotion framework 426 to support the locomotion of the robot 116.

In these examples, the robot 116 acquires the component 110 at the seller location 708, e.g., responsive to verifying the component at the seller location 708. The robot 116 then transports the component 110 to a buyer location 710, e.g., a second location. In one or more implementations, this second location is associated with a buyer, such as a buyer's residence, a workplace of the buyer, a place where the buyer's apparatus has been stranded (e.g., on the side of the road), or a location where the buyer has otherwise specified to meet the autonomous technician for installing the component to the apparatus, to name just a few. In at least one scenario, the buyer location, e.g., the second location, corresponds to a location associated with the platform 122, such as a shop utilized by the platform 122 to install components.

By way of example, the robot 116 stows the component 110 and travels with the component 110 along a second stage 704 of the determined route 604 from the seller location 708 to the buyer location 710 (block 1808 of FIG. 18), as shown by FIG. 8. After the robot 116 arrives at the buyer location 710 with the component 110, the robot 116 (or another robot 116) installs the component 110 to the apparatus 114 of the buyer. In some instances, the robot 116 communicates to the buyer that the robot 116 has arrived at the buyer location 710, e.g., via communication with service provider system 102 which then communicates with buyer computing device 112 through platform 122. In some scenarios, the buyer provides the robot 116 with temporary access to the apparatus 114, such as via a code to an electronic lock, e.g., a door lock, a vehicle lock, or a garage panel. In one or more implementations, information for unlocking such electronic locks is included in the transaction data 306. After installing the component 110 to the apparatus 114, the robot 116 travels from the buyer location 710 to another location, such as by returning to the deployment location 700 along a third stage 706 of the determined route 604, as shown in FIG. 9. To support installation of the component 110 to the apparatus 114, the robot 116 includes various devices, as described below.

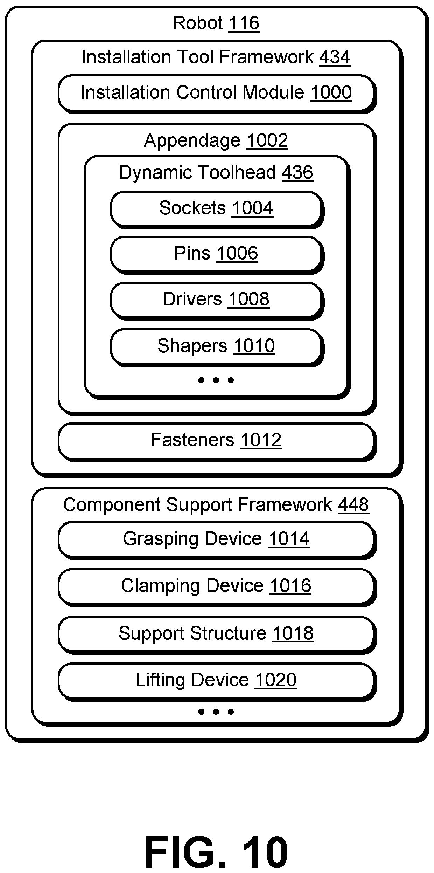

FIG. 10 shows an implementation of the installation tool framework 434 and the component support framework 448 of the robot 116. In the illustrated implementation, the installation tool framework 434 includes an installation control module 1000, an appendage 1002, and fasteners 1012. The installation control module 1000 is configured to communicate with the service provider system 102 and the databases 106 via the network communication module 438. The installation control module 1000 receives installation instructions from the installation protocol module 446 and performs operations using the appendage 1002, the fasteners 1012, and the component support framework 448 in accordance with installation instructions. Example operations are described further below with reference to FIG. 16.

In one or more implementations, the appendage 1002 includes the dynamic toolhead 436. In some implementations, the appendage 1002 is a rigid appendage, e.g., an arm. In other implementations, the appendage 1002 has a different structure, such as a flexible multi-jointed structure supporting bending and rotating or twisting of the appendage 1002.

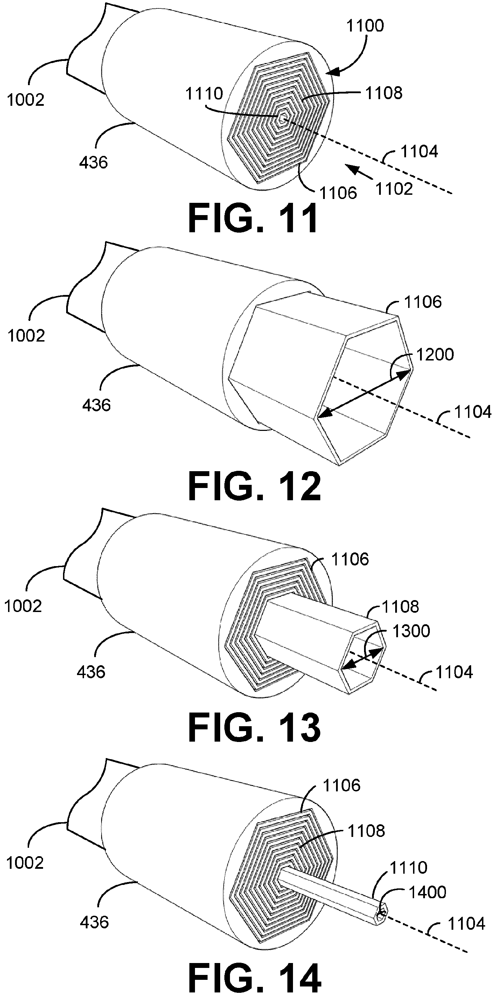

The dynamic toolhead 436 includes various tools, examples of which include but are not limited to sockets 1004, pins 1006, drivers 1008, shapers 1010, and so forth. Of course, the dynamic toolhead 436 may have different tools in variations. The robot 116 controls the dynamic toolhead 436 to employ one or more tools included by the dynamic toolhead 436 while other tools of the dynamic toolhead 436 are stowed, e.g., retracted. For instance, the installation control module 1000 commands an operation to be performed using the dynamic toolhead 436 while the dynamic toolhead 436 has a particular socket of the sockets 1004 extended and with other sockets of the sockets 1004 stowed. Example implementations of the dynamic toolhead 436 are shown by FIGS. 11-14 and described below.

The component support framework 448 includes various devices that work either alone or in combination with the devices of the dynamic toolhead 436. In the implementation shown, the component support framework 448 includes a grasping device 1014, a clamping device 1016, a support structure 1018, and a lifting device 1020. However, other devices are possible. The grasping device 1014 is a device, such as a pincer, used to grasp portions of other devices, such as the component 110 and/or the apparatus 114. The clamping device 1016 is a device, such as a clamp, used to secure a position of other devices or temporarily connect two devices. The support structure 1018 is a frame or other structure, such as a platform, used to hold another device or apparatus. The lifting device 1020 is a device used to elevate a position of another device, e.g., lift another device relative to a ground surface. The various devices communicate electronically with the installation control module 1000, in some implementations, to receive commands from the installation control module 1000. For instance, the installation control module 1000 is able to issue instructions to the devices for movement of the devices, with movement performed via actuation of one or more actuators of the devices (e.g., solenoids, pistons, and so forth).

Referring collectively to FIGS. 11-14, various implementations of the dynamic toolhead 436 are shown. The dynamic toolhead 436 is shown arranged at an end of the appendage 1002. Movement of the appendage 1002 and the dynamic toolhead 436 is controlled via the installation control module 1000 as described above.

The dynamic toolhead 436 is shown including a tool set 1100. The tool set 1100 includes tools such as the sockets 1004 described above. The tool set 1100 is shown including a first socket 1106, a second socket 1108, and a third socket 1110. The sockets are retractable into the dynamic toolhead 436 along axis 1104, as depicted by FIG. 11, such that the sockets do not extend outward from a front end 1102 of the dynamic toolhead 436. However, the installation control module 1000 can command the dynamic toolhead 436 to extend one or more of the sockets. Likewise, the installation control module 1000 can command the dynamic toolhead 436 to retract one or more of the sockets.

For instance, FIG. 12 shows the first socket 1106 in an extended position. The first socket 1106 has a larger first width 1200. FIG. 13 shows the first socket 1106 in the retracted position and the second socket 1108 in the extended position. The second socket 1108 has a second width 1300 smaller than the first width 1200. FIG. 14 shows the first socket 1106 and the second socket 1108 each in the retracted position, with the third socket 1110 in an extended position. The third socket 1110 has a third width 1400 that is smaller than each of the first width 1200 and the second width 1300.

The installation control module 1000 controls which tools are extended to support interaction of the dynamic toolhead 436 with fasteners or other articles of various sizes. For instance, during installation of the component 110 to the apparatus 114, the installation procedure may include adjustment of various nuts or bolts of different sizes. The installation control module 1000 can control the dynamic toolhead 436 to adjust which socket is in the extended position. The installation control module 1000 can then control the dynamic toolhead 436 to use the extended portion to loosen or tighten the nuts or bolts in accordance with the installation instructions.

Referring to FIG. 15, an implementation of the robot 116 for verifying the condition of the apparatus 114 is shown. In some cases, the robot 116 verifies the condition of the apparatus 114 prior to installation of the component 110 to the apparatus 114.

For example, the robot 116 detects the condition of the apparatus 114 (e.g., assesses the apparatus 114) by acquiring data describing the apparatus 114 via the sensors 400 (block 1902 of FIG. 19). A sensor output 1500 from the sensors 400 includes digital images of the apparatus 114 acquired via the camera 402. The condition verification module 440 receives the sensor output 1500 and processes the sensor output 1500 via one or more machine learning models, such as machine learning model 1502. In one or more implementations, the machine learning model 1502 is a deep neural network, or is or includes (e.g., in an ensemble of models) a large language model. The machine learning model 1502 is trained on data describing manufactured conditions of different apparatuses. In at least one implementation, the machine learning model 1502 is trained on image data describing various apparatuses, e.g., vehicles. The condition verification module 440 then employs the machine learning model 1502 to identify a make and model of the apparatus 114, such as in situations in which the apparatus 114 is a vehicle.

The condition of the apparatus 114 as verified by the condition verification module 440 may also include a wear and/or modification status of the apparatus 114 in some instances. As one example, the condition verification module 440 determines via the machine learning model 1502 whether the apparatus 114 has been modified at some time following manufacture of the apparatus 114 based on the sensor output 1500. By way of example, modification of the apparatus 114 may include installation of aftermarket components to the apparatus 114, modification of components of the apparatus 114, removal of components from the apparatus 114, and so forth.

The condition verification module 440 outputs an apparatus verification result 1504, such as to the service provider system 102. Based on a content of the apparatus verification result 1504, the service provider system 102 performs various operations. In a scenario in which the apparatus verification result 1504 indicates that the apparatus 114 has not been modified relative to a manufactured condition of the apparatus 114, the service provider system 102 communicates with the robot 116 to instruct the robot 116 to proceed with installation of the component 110 to the apparatus 114. In a different scenario in which the apparatus verification result 1504 indicates that the apparatus 114 has been modified post-manufacture, the service provider system 102 communicates with the robot 116 to provide updated instructions to the robot 116. The updated instructions may include, for instance, an updated installation procedure to be performed by the robot 116, where the updated installation procedure accounts for modifications that have been made to the apparatus 114. In at least one implementation, the robot 116 is configured to modify installation instructions on-the-fly via the installation protocol module 446 using another learning model, as described below with reference to FIG. 16. Alternatively, in a scenario where the apparatus verification result 1504 indicates that the apparatus 114 has been modified post-manufacture or its compatibility otherwise cannot be verified, the service provider system 102 may communicate an instruction to the robot 116 to cancel installation of the component 110 to the apparatus 114.

FIG. 16 depicts an example implementation of the robot 116 performing installation of the component 110 to the apparatus 114. In this example, the installation protocol module 446 of the robot 116 receives the apparatus verification result 1504 and the component verification result 508. Based on the content of those results, the robot 116 communicates with the databases 106 to retrieve various installation protocols (block 1904 of FIG. 19). In at least one example, the databases 106 include one or more installation protocol libraries, such as protocol library 1600, and one or more application programming interfaces (APIs), such as application programming interface 1602. The installation protocol module 446 employs a machine learning model 1606, which is trained on data describing a plurality of installation protocols, to process the apparatus verification result 1504 and the component verification result 508. In at least one implementation, the machine learning model is a neural network, e.g., a deep neural network.

In at least one implementation, an output of the machine learning model 1606 indicates one or more protocols and/or APIs to be retrieved from databases 106. The installation protocol module 446 retrieves the one or more protocols and/or APIs and provides the retrieved protocols and/or APIs to the machine learning model 1606 (block 1906 of FIG. 19). The machine learning model 1606 then electronically communicates installation instructions 1604 to the installation control module 1000 based on the retrieved information. The installation control module 1000 controls the dynamic toolhead 436 and other components of the robot 116 in accordance with the installation instructions 1604 to install the component 110 to the apparatus 114 (block 1908 of FIG. 19).

In a scenario where the apparatus verification result 1504 indicates that the detected condition of the apparatus 114 matches the manufactured condition of the apparatus 114, the installation protocol module 446 retrieves a first set of protocols from the protocol library 1600 and/or one or more APIs, e.g., the application programming interface 1602. The first set of protocols and/or APIs are used by the robot 116 for installation of the component 110 to the apparatus 114 during conditions in which the apparatus 114 has not been modified post-manufacture. Modification post-manufacture refers to installation of components or the performance of other modifications to the apparatus 114 that may interfere with installation of the component 110.

However, in a scenario in which the apparatus verification result 1504 indicates that the apparatus 114 has been modified post-manufacture, the installation protocol module 446 retrieves a second set of protocols and/or APIs. The second set of protocols or APIs include differences in the installation procedure based on the modifications that have been made to the apparatus 114. For instance, modification of the apparatus 114 with an aftermarket device can alter access to other portions of the apparatus 114, e.g., clearances within the apparatus 114 and other attributes. The second set of protocols or APIs provides the robot 116 with instructions for navigating around aftermarket devices installed to the apparatus 114 (and/or removing the aftermarket devices) in order to install the component 110 to the apparatus 114.

The installation protocol module 446 further receives signals from the sensors 400 of the robot 116 and adjusts the installation instructions 1604 based on the received signals. The signals may include electronic signals such as image data from the camera 402 and audio data from the microphone 404. The signals may further include, for example, voltage, current, and/or resistance measurements from the multimeter 408, weight measurements from the scale 412, and/or optical measurements from the spectrometer 416, among others.

In one example scenario, the installation protocol module 446 provides the installation instructions 1604 to the installation control module 1000. The installation control module 1000 then controls the dynamic toolhead 436 according to the installation instructions 1604. The installation instructions 1604 include instructions for performing an operation of removing a bolt from the apparatus 114. According to information included in the protocol provided to the installation protocol module 446, the bolt has a particular head diameter, e.g., ten millimeters. The installation protocol module 446 identifies the bolt to be removed via the machine learning model 1606 which receives image data from the camera 402 of the sensors 400, and the installation protocol module 446 detects a shape of the bolt based on the image data (block 1910 of FIG. 19).

However, in detecting the shape of the bolt, the installation protocol module 446 determines that the size of the head of the bolt is larger than the diameter described by the protocol. As one example, the detected diameter is twenty millimeters instead of ten millimeters. In response to this determination, the installation protocol module 446 adjusts operation of the dynamic toolhead 436 based on the detected shape (e.g., diameter) of the bolt (block 1912 of FIG. 19). The installation protocol module 446 outputs updated installation instructions that control the dynamic toolhead 436 to utilize a socket sized appropriately to the twenty-millimeter head (e.g., the second socket 1108 shown by FIG. 13) instead of a socket sized to the ten millimeter head (e.g., the third socket 1110 shown by FIG. 14).

The above-described scenario is one example of on-the-fly modification of installation instructions performed by the robot 116. However, the robot 116 is not limited to adjustment of the instructions based on bolt size or bolt shape. In other instances, the installation instructions are adjusted responsive to detection of other parameters. Such adjustments to the installation instructions include, for instance, adjusting a torque applied to the apparatus 114 by the dynamic toolhead 436 based on a detected weight or density of a portion of the apparatus 114, e.g., as measured by the sensors 400. The robot 116 may adjust the installation instructions based on detecting a variety of conditions in variations.

In one or more scenarios, examples of which are described above, the robot 116 employs the installation tool framework 434 to remove one or more components from the apparatus 114 (or at least partially disassemble them) prior to installing the component 110, e.g., to replace the one or more components with the component 110. In some implementations, the robot 116 controls the dynamic toolhead 436 to remove the one or more components in accordance with the protocols and/or APIs described above. In at least one implementation, the installation protocol module 446 receives signals from the sensors 400 of the robot 116 and determines the location and/or arrangement of one or more components to be removed from the apparatus 114 prior to installation of the component 110. As a result, the installation protocol module 446 updates the installation instructions to control the dynamic toolhead 436 and/or other devices of the installation tool framework 434 to remove the one or more components and install the component 110.

In some implementations, the robot 116 is selected from among a plurality of robots forming the autonomous technician 120 based on particular characteristics of the robot 116 that increase an ease of installation of the component 110 to the apparatus 114. In one scenario, the autonomous technician 120 includes several robots including a configuration similar to the robot 116, but each robot has a different overall profile or form factor. A first robot for instance has a lower overall height than the other robots, while a second robot has a narrower diameter than the other robots. Depending on the attributes of the component 110 to be installed to the apparatus 114 and/or attributes of the apparatus 114, the first robot or the second robot is selected for deployment and installation of the component 110. If the component 110 is to be installed to an underside of the apparatus 114, for example, the first robot may be deployed to increase an ease with which the robot fits beneath the apparatus 114 to perform installation operations. However, if the component 110 is to be installed to an interior space of the apparatus 114 with reduced clearances, the second robot is deployed to increase an ease with which the robot fits within the interior of the apparatus 114.

FIG. 17 depicts a procedure in an example implementation of verifying a component for an apparatus via an autonomous technician.

A component is assessed at a seller location via a robot using one or more sensors (block 1702). In accordance with the principles described herein, assessing the component includes scanning (e.g., measuring, imaging, etc.) the component via the one or more sensors of the robot. By way of example, one or more of the robots 116 of the autonomous technician 120 assess the component 110 at a seller location, e.g., the seller location 708.

An identifier of the component is determined based on an output of the one or more sensors during the assessing using a component recognition machine learning model of the robot (block 1704). In accordance with the principles described herein, determining the identifier of the component using the component recognition machine learning model includes detecting the identifier based on similarity between the identifier and a plurality of known identifiers. The similarity is determined via the machine learning model, where the machine learning model is trained on data describing the plurality of known identifiers. By way of example, one or more of the robots 116 of the autonomous technician 120 determine the identifier 510 of the component 110 based on output from one or more of the sensors 400 using the machine learning model 506.

A match is determined between the identifier and the apparatus (block 1706). In accordance with the principles described herein, determining the match between the identifier and the apparatus includes comparing the identifier to the known reference identifiers, where the known reference identifiers are associated with apparatuses in one or more compatibility libraries and/or databases. By way of example, one or more robots 116 of the autonomous technician 120 determine a match between the identifier 510 and the apparatus 114 by comparing the identifier 510 to known identifiers included in UPC database 500, MPN database 502, and/or compatibility library 504 via the machine learning model 506.

A component verification result is output (block 1708). In accordance with the principles described herein, outputting the component verification result includes communicating the component verification result electronically to a service provider system. By way of example, one or more robots 116 of the autonomous technician 120 output the component verification result 508 and communicate the component verification result 508 to service provider system 102, where the component verification result 508 indicates whether the component 110 is compatible for installation to the apparatus 114.

FIG. 18 depicts a procedure in an example implementation of transporting a component for an apparatus from a seller location to a buyer location via an autonomous technician.

Transaction data associated with the component is received, the transaction data including buyer location data (block 1802). In accordance with the principles described herein, receiving the transaction data associated with the component includes acquiring the transaction data by one or more robots of an autonomous technician from a service provider system. By way of example, one or more robots 116 of the autonomous technician 120 receive the transaction data 306 through electronic communication with the service provider system 102.

A route to the buyer location is generated via the location and routing module based on the buyer location data (block 1804). In accordance with the principles described herein, generating the route to the buyer location based on the buyer location data includes generating the route from a seller location to the buyer location. By way of example, one or more robots 116 of the autonomous technician 120 generate the determined route 604 from the seller location 708 to the buyer location 710 based on the buyer location data 600 included in the transaction data 306.

Feedback is received from the one or more sensors, and commands are issued to the locomotion framework based on the received feedback (block 1806). In accordance with the principles described herein, receiving feedback from the one or more sensors and issuing commands to the locomotion framework based on the received feedback includes detecting an environment of one or more robots of the autonomous technician and issuing commands to the locomotion framework for navigating the detected environment. Detecting the environment includes, but is not limited to, detecting a terrain around the one or more robots, detecting weather conditions around the one or more robots, and detecting obstacles and/or pathways around the one or more robots. By way of example, one or more robots 116 of the autonomous technician 120 receive feedback from one or more of the sensors 400 and issue commands to locomotion framework 426 through locomotion controller 450 based on the received feedback.

The component is transported along the route to the buyer location (block 1808). In accordance with the principles described herein, transporting the component along the route to the buyer location includes stowing the component via the one or more robots of the autonomous technician and transporting the component along the route by traveling the route via the one or more robots. By way of example, one or more robots 116 of the autonomous technician 120 acquire the component 110 at the seller location 708 and travel along the determined route 604 to transport the component 110 from the seller location 708 to the buyer location 710.

FIG. 19 depicts a procedure in an example implementation of installing a component for an apparatus via an autonomous technician.

A condition of the apparatus is assessed at the buyer location via the robot using one or more sensors (block 1902). In accordance with the principles described herein, assessing the condition of the apparatus includes determining a wear and/or modification status of the apparatus based on an output of the one or more sensors. By way of example, one or more robots 116 of the autonomous technician 120 assess the condition of the apparatus 114 by scanning the apparatus 114 via one or more of the sensors 400. Scanning the apparatus 114 includes, for example, employing one or more of camera 402, microscope 410, and spectrometer 416 to generate sensor output 1500 including data (e.g., image data) data describing the apparatus 114. The sensor output 1500 is processed by machine learning model 1502 to assess the condition of the apparatus 114, e.g., generate apparatus verification result 1504.

Installation protocols and/or APIs are determined based on condition of the apparatus and condition of the component (block 1904). In accordance with the principles described herein, determining installation protocols and/or APIs based on the condition of the apparatus and the condition of the component includes processing data describing the condition of the apparatus and data describing the condition of the component via a machine learning model, and determining the installation protocols and/or APIs according to an output of the machine learning model. By way of example, one or more robots 116 of the autonomous technician 120 process the apparatus verification result 1504 describing the condition of apparatus 114 and the component verification result 508 describing the condition of component 110 via machine learning model 1606. The machine learning model 1606 determines installation protocols and/or APIs to be acquired by the one or more robots 116 based on the apparatus verification result 1504 and the component verification result 508.

The installation protocols and/or APIs are provided to an installation procedure machine learning model (block 1906). In accordance with the principles described herein, the determined installation protocols and/or APIs are acquired from one or more databases. By way of example, one or more robots 116 of the autonomous technician 120 acquire the determined installation protocols from protocol library 1600 stored in databases 106 and/or acquire the APIs, such as application programming interface 1602, from databases 106. The acquired installation protocols and/or APIs are provided to machine learning model 1606.

The component is installed to the apparatus via the robot using the installation procedure machine learning model (block 1908). In accordance with the principles described herein, installing the component to the apparatus via the robot includes performing operations via the robot in accordance with installation instructions output by the installation procedure machine learning model. By way of example, one or more of the robots 116 of the autonomous technician 120 are controlled to perform operations included in installation instructions 1604 output by the machine learning model 1606. The installation instructions 1604 are executed by the one or more robots, e.g., through commands issued by installation control module 1000, to control operation of the installation tool framework 434 and other components of the one or more robots to install the component 110 to the apparatus 114.

A shape of a fastener to be rotated during the installation is detected (block 1910). In accordance with the principles described herein, detecting the shape of the fastener to be rotated is one operation that may be performed during the installation of the component to the apparatus. By way of example, one or more robots 116 of the autonomous technician 120 detect the shape of the fastener, e.g., a fastener included by the apparatus 114, based on an output of one or more of the sensors 400. The shape of the fastener is determined by a machine learning model, such as machine learning model 1502, with data describing the determined shape communicated to the machine learning model 1606. Based on the determined shape, the machine learning model 1606 updates the installation instructions 1604 (e.g., if the determined shape is different than an expected shape, where the expected shape is described by one or more of the acquired installation protocols and/or APIs) or maintains the installation instructions 1604 (e.g., if the determined shape matches the expected shape).

A dynamic toolhead is adjusted based on the detected shape of the fastener (block 1912). In accordance with the principles described herein, adjusting the dynamic toolhead based on the detected shape of the fastener includes extending one or more tools included by the dynamic toolhead to engage the tools with the fastener, e.g., for rotation of the fastener. By way of example, dynamic toolhead 436 of one of the robots 116 of the autonomous technician 120 includes a plurality of sockets 1004, and the dynamic toolhead 436 is adjusted by the robot 116 such that the first socket 1106 is in the extended position while other sockets included by the dynamic toolhead 436 are in the retracted position. With the first socket 1106 in the extended position, the dynamic toolhead 436 engages the first socket 1106 with the fastener for rotation of the fastener (e.g., for removal of the fastener from the apparatus 114 or the component 110, or tightening of the fastener to the apparatus 114 or the component 110).

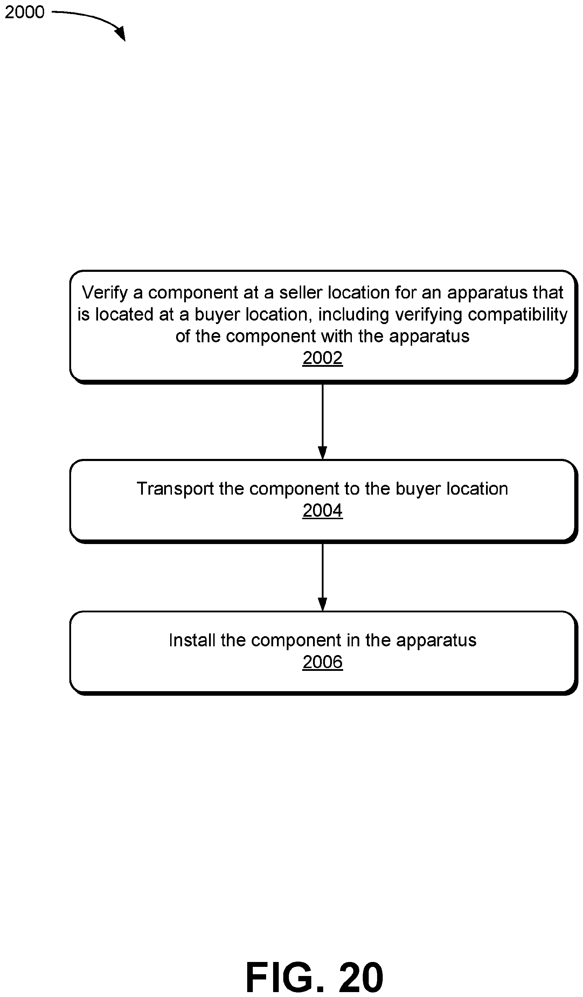

FIG. 20 depicts a procedure 2000 in an example implementation of an autonomous technician system for component handling and installation.

A component is verified at a seller location for an apparatus that is located at a buyer location (block 2002). In accordance with the principles described herein, verification of the component includes verifying compatibility of the component with the apparatus. By way of example, one or more of the robots 116 of the autonomous technician 120 verifies the component 110 at a buyer location, e.g., the buyer location 710. In accordance with the described techniques, the one or more robots 116 verify compatibility of the component 110 with the apparatus 114.

The component is transported to the buyer location (block 2004). By way of example, one or more of the robots 116 of the autonomous technician 120 transports the component 110 to the buyer location 710.

The component is installed in the apparatus (block 2006). By way of example, one or more of the robots 116 of the autonomous technician 120 installs the component 110 in the apparatus 114.

### Example System and Device

Referring to FIG. 21, an example system 2100 is depicted that includes an example computing device that is representative of one or more computing systems and/or devices that are usable to implement the various techniques described herein. This is illustrated through inclusion of the service provider system 102 implementing the robot 116. Computing device 2120 includes, for example, a server of the service provider system 102, a device associated with a client (e.g., a client device), an on-chip system, and/or any other suitable computing device or computing system.

The example computing device 2120 as illustrated includes a processing system 2102, one or more computer-readable media 2106, and one or more input/output interfaces 2110 (I/O interfaces) that are communicatively coupled, one to another. Although not shown, the computing device 2120 further includes a system bus or other data and command transfer system that couples the various components, one to another. For example, a system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 2102 is representative of functionality to perform one or more operations using hardware. Accordingly, the processing system 2102 is illustrated as including hardware elements 2104 that are configured as processors, functional blocks, and so forth. This includes example implementations in hardware as a system specific integrated circuit or other logic device formed using one or more semiconductors. The hardware elements 2104 are not limited by the materials from which they are formed or the processing mechanisms employed therein. For example, processors are comprised of semiconductor(s) and/or transistors (e.g., electronic integrated circuits (ICs)). In such a context, processor-executable instructions are, for example, electronically-executable instructions.

The computer-readable media 2106 is illustrated as including memory/storage 2108. The memory/storage 2108 represents memory/storage capacity associated with one or more computer-readable media. In one example, the memory/storage 2108 includes volatile media (such as random access memory (RAM)) and/or nonvolatile media (such as read only memory (ROM), Flash memory, optical disks, magnetic disks, and so forth). In another example, the memory/storage 2108 includes fixed media (e.g., RAM, ROM, a fixed hard drive, and so on) as well as removable media (e.g., Flash memory, a removable hard drive, an optical disc, and so forth). The computer-readable media 2106 is configurable in a variety of other ways as further described below.

The input/output interface(s) 2110 are representative of functionality to allow user input to enter commands and information to the computing device 2120, and also allow information to be presented and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which employs visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 2120 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are implementable on a variety of commercial computing platforms having a variety of processors.

Implementations of the described modules and techniques are storable on or transmitted across some form of computer-readable media. For example, the computer-readable media includes a variety of media that is accessible to the service provider system 102. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The one-or-more computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which are accessible to a computer.

"Computer-readable signal media" refers to a signal-bearing medium that is configured to transmit instructions to the hardware of the computing device 2120, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, the hardware elements 2104 and the computer-readable media 2106 are representative of modules, programmable device logic and/or fixed device logic implemented in a hardware form that is employable in some implementations to implement at least some aspects of the techniques described herein, such as to perform one or more instructions. Hardware includes components of an integrated circuit or on-chip system, a system-specific integrated circuit (ASIC), a field-programmable gate array (FPGA), a complex programmable logic device (CPLD), and other implementations in silicon or other hardware. In this context, hardware operates as a computing device that performs program tasks defined by instructions and/or logic embodied by the hardware as well as a hardware utilized to store instructions for execution, e.g., the computer-readable storage media described previously.

Combinations of the foregoing are also employable to implement various techniques described herein. Accordingly, software, hardware, or executable modules are implementable as one or more instructions and/or logic embodied on some form of computer-readable storage media and/or by one or more of the hardware elements 2104. For example, the computing device 2120 is configured to implement particular instructions and/or functions corresponding to the software and/or hardware modules. Accordingly, implementation of a module that is executable by the computing device 2120 as software is achieved at least partially in hardware, e.g., through use of computer-readable storage media and/or the hardware elements 2104 of the processing system 2102. The instructions and/or functions are executable/operable by one or more articles of manufacture (for example, one or more computing devices such as computing device 2120 and/or processing systems such as processing system 2102) to implement techniques, modules, and examples described herein.

The techniques described herein are supportable by various configurations of the computing device 2120 and are not limited to the specific examples of the techniques described herein. This functionality is also implementable entirely or partially through use of a distributed system, such as over a "cloud" 2112 as described below.

The cloud 2112 includes and/or is representative of the platform 122 for resources 2114. The platform 122 abstracts underlying functionality of hardware (e.g., servers) and software resources of the cloud 2112. For example, the resources 2114 include systems and/or data that are utilized while computer processing is executed on servers that are remote from the computing device 2120. In some examples, the resources 2114 also include services provided over the Internet and/or through a subscriber network, such as a cellular or Wi-Fi network.

The platform 122 abstracts the resources 2114 and functions to connect the computing device 2120 with other computing devices. In some examples, the platform 122 also serves to abstract scaling of resources to provide a corresponding level of scale to encountered demand for the resources that are implemented via the platform 122. Accordingly, in an interconnected device implementation, implementation of functionality described herein is distributable throughout the system 2100. For example, the functionality is implementable in part on the computing device 2120 as well as via the platform 122 that abstracts the functionality of the cloud 2112.

The autonomous technician management module 2118 included by the service provider system 102 is utilized by the service provider system 102 for control of communications between the service provider system 102 and the autonomous technician 120, e.g., to support operations such as deployment of the robot 116. For example, the service provider system 102 receives the robot assistance request 308 described above with reference to FIG. 3 via the autonomous technician management module 2118. Responsive to receiving the robot assistance request 308, the service provider system 102 utilizes the autonomous technician management module 2118 to communicate with one or more robots of the autonomous technician 120 for deployment of the one or more robots to perform operations including component condition verification, component transport, and component installation as described herein. Further, during conditions in which a robot such as the robot 116 communicates with the databases 106 to acquire installation protocols or other data as described herein, such communications are routed through the autonomous technician management module 2118 of the service provider system 102 at least in some implementations. The service provider system 102 then provides the requested data from the databases 106 to the robot by communicating electronically with the robot via the autonomous technician management module 2118. The autonomous technician management module 2118, in some implementations, provides wired and/or wireless communication capabilities between the service provider system 102 and the robots of the autonomous technician 120 for issuing instructions to the robots and providing data and other information to the robots as described herein.

### Conclusion

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter. Further, various different examples are described and it is to be appreciated that each described example is implementable independently or in connection with one or more other described examples.

## Claims

1. A system of one or more robots that implement an autonomous technician, the system comprising:
the autonomous technician configured to perform operations comprising:
verifying a component at a first location for an apparatus that is located at a second location, including verifying compatibility of the component with the apparatus;
transporting the component to the second location; and
installing the component in the apparatus.

2. The system as described in claim 1,
wherein the autonomous technician includes one or more sensors, and verifying compatibility of the component with the apparatus includes:
assessing the component at the first location using the one or more sensors;
determining an identifier of the component based on an output of the one or more sensors during the assessing; and
matching the identifier to the apparatus;
wherein the autonomous technician may include a component recognition machine learning model stored in memory, the component recognition machine learning model may be trained on data including a plurality of component identifiers, and the determining of the identifier of the component may be performed using the component recognition machine learning model.

3. The system as described in claim 1 or 2, wherein the autonomous technician includes a dynamic toolhead, and installing the component in the apparatus with the autonomous technician includes:
detecting a shape of a fastener to be rotated during the installing; and
adjusting the dynamic toolhead based on the detected shape of the fastener.

4. The system as described in any one of the preceding claims, wherein the autonomous technician includes:
one or more sensors;
a locomotion framework; and
a reasoning module configured to receive feedback from the one or more sensors and issue commands to the locomotion framework based on the received feedback.

5. The system as described in any one of the preceding claims, wherein the autonomous technician includes:
an installation procedure machine learning model stored in memory, the installation procedure machine learning model trained on data including a plurality of installation instructions, and installing the component in the apparatus is performed using the installation procedure machine learning model; and/or
a component recognition machine learning model and an installation procedure machine learning model, the component recognition machine learning model trained on data including a plurality of component identifiers and the installation procedure machine learning model trained on data including a plurality of installation instructions, and an output of the component recognition machine learning model is an input of the installation procedure machine learning model.

6. The system as described in any one of the preceding claims, wherein the autonomous technician includes a location and routing module, and transporting the component to the second location includes:
receiving transaction data associated with the component, the transaction data including location data describing the second location;
generating a route to the second location via the location and routing module based on the location data; and
transporting the component along the route to the second location.

7. The system as described in any one of the preceding claims, wherein the autonomous technician includes a first robot configured to perform the verifying of the component at the first location for the apparatus that is located at the second location, and a second robot configured to perform the installing of the component in the apparatus.

8. The system as described in any one of the preceding claims, wherein the autonomous technician includes a network communication module configured to retrieve component installation data via wired or wireless communications responsive to determining an identifier of the component using one or more sensors.

9. The system as described in claim 8, wherein the network communication module retrieves the component installation data from a service provider system including a listing of the component; and/or
the first location is associated with a seller of the component and the second location is associated with a buyer of the component.

10. A method implemented by one or more robots of an autonomous technician, the method comprising:
verifying, by the autonomous technician, a component at a first location for an apparatus that is located at a second location;
transporting, by the autonomous technician, the component to the second location; and
installing, by the autonomous technician, the component in the apparatus.

11. The method as described in claim 10,
wherein verifying the component at the first location for the apparatus that is located at the second location includes:
assessing the component, by the autonomous technician, using one or more sensors of the autonomous technician;
determining, by the autonomous technician, an identifier of the component based on an output of the one or more sensors during the assessing; and
matching, by the autonomous technician, the identifier to the apparatus;
wherein transporting the component to the second location may include:
receiving, by the autonomous technician, location data describing the second location;
generating, by the autonomous technician, a route to the second location based on the location data; and
transporting, by the autonomous technician, the component along the route to the second location.

12. The method as described in claim 10 or 11, wherein verifying the component at the first location for the apparatus that is located at the second location is performed by the autonomous technician using a first machine learning model of the autonomous technician, and installing the component in the apparatus is performed by the autonomous technician using a second machine learning model of the autonomous technician;
wherein the first machine learning model may be trained on data describing a plurality of known component identifiers, and the second machine learning model may be trained on data describing a plurality of installation protocols.

13. The method as described in any one of claims 10 to 12, further comprising:
verifying, by the autonomous technician, a condition of the apparatus that is located at the second location by:
acquiring, by the autonomous technician, image data describing the apparatus using one or more sensors of the autonomous technician;
detecting, by the autonomous technician, the condition of the apparatus based on the image data; and
determining, by the autonomous technician, whether the detected condition of the apparatus matches a described condition of the apparatus using a machine learning model.

14. One or more computer-readable storage media storing executable instructions which, responsive to execution by an autonomous technician implemented by one or more robots, cause the autonomous technician to perform operations comprising:
verifying a component at a first location for an apparatus that is located at a second location, including verifying compatibility of the component with the apparatus;
transporting the component to the second location; and
installing the component in the apparatus.

15. The one or more computer-readable storage media as described in claim 14, the operations further comprising:
inputting data describing the component to a first machine learning model for the verifying of the component;
generating a route from the first location to the second location to be travelled by the autonomous technician for the transporting of the component to the second location;
inputting data describing one or more installation protocols to a second machine learning model for the installing of the component in the apparatus; and
verifying a condition of the apparatus that is located at the second location by inputting data describing the apparatus to a third machine learning model.
